# EUROPEAN PATENT APPLICATION

(11) **EP 4 827 050 A1**
(43) Date of publication of application: **21.10.2026**
(21) Application number: 26164912.3
(22) Date of filing: 16.03.2026
(51) Int. Cl.: H04L 9/40

(54) **ENDPOINT NODE TOKEN TRANSMISSION FOR COMMUNICATION LINKS**

(30) Priority: 17.04.2025 US 202519181793
(71) Applicant: HP Technology Holdings LLC, Palo Alto, CA 94304 (US)
(72) Inventor: Kaplan, Eli Henry, Palo Alto, CA, 94304 (US); White, Devin Scott, Palo Alto, CA, 94304 (US); Cottrell, Mark, Palo Alto, CA, 94304 (US)
(74) Representative: Plasseraud IP

(57) **Abstract**

A virtual desktop infrastructure (VDI) endpoint node, method, and computer readable medium are provided for establishing communication links. The VDI endpoint node implements a trust agent that transmits a local state of the VDI endpoint node to a trust center, receives from the trust center a token based on an evaluation of the local state and signed by the trust center, and establishes a communication link with a peer VDI endpoint node. To establish the communication link, the trust agent countersigns the token to generate a countersigned token and transmits the countersigned token to the peer VDI endpoint node.

## Description

### BACKGROUND

A virtual desktop infrastructure (VDI) allows a client device of a user to access virtual or remote desktop environments via a network connection. This VDI technology enables organizations to provide consistent computing experiences across different client devices while maintaining centralized control over data and applications. A VDI may include hardware, software, and combinations thereof (e.g., including client devices, host devices broker devices, network devices and components, and corresponding instructions executable by these devices) to implement virtual desktop sessions between clients and hosts.

### BRIEF DESCRIPTION OF THE DRAWINGS

The following drawings are provided to help illustrate various features of examples of the disclosure and are not intended to limit the scope of the disclosure or exclude alternative implementations.
FIG. 1 illustrates an example VDI endpoint node according to some implementations of the disclosure.
FIG. 2 illustrates an example network environment according to some implementations of the disclosure.
FIG. 3 illustrates an example of the endpoint node of FIG. 2 according to some implementations of the disclosure.
FIG. 4 illustrates an example of the trust center of FIG. 2 according to some implementations of the disclosure.
FIG. 5 illustrates a sequence diagram of an example token exchange according to some implementations of the disclosure.
FIG. 6 illustrates a sequence diagram of another example token exchange according to some implementations of the disclosure.
FIG. 7 is a flowchart illustrating an example method for establishing a communication link according to some implementations of the disclosure.
FIG. 8 illustrates example memory storing instructions for establishing a communication link according to some implementations of the disclosure.

### DETAILED DESCRIPTION

Computer networks may implement security measures to protect sensitive data and resources. These measures may include authentication protocols, access controls, and encryption techniques. In some network architectures, trust relationships between devices or entities on the network are established and managed to facilitate secure communications and data exchange. Establishing and maintaining trust between networked devices presents significant security challenges, particularly for remote desktop sessions where sensitive data and resources may be accessed across networks. Some security approaches rely on perimeter-based defenses that fail to address the dynamic nature of device trustworthiness. Additionally, centralized security management can create bottlenecks in network communications and establishing links within a network as network environments grow larger with ever increasing numbers and types of endpoints.

The present disclosure describes a zero-trust architecture that uses a token-based trust verification technique for remote desktop sessions and other communication links that are desired to be secure. In zero trust security models, access to applications and data is denied by default. Threat prevention is achieved by selectively granting access utilizing policy informed by risk-based verification of users and devices. The disclosed techniques enable endpoint nodes to securely exchange signed trust tokens that contain attestations of their security state, allowing peer-to-peer verification that reduces communication with a central trust authority and associated delays and network traffic. The trust tokens may be issued by a trusted entity known by and associated with the endpoint nodes, referred to as a trust center. The trust tokens issued by the trust center may be temporary in that the tokens are associated with or include an expiration event (e.g., an expiration time, condition, or constraint). This approach can reduce bottlenecks at centralized security services and systems, enable continuous trust verification throughout sessions, accommodate changing security states of endpoint nodes, and allow for degradation of permissions or terminating access when trust levels change-all while maintaining robust security for remote desktop environments.

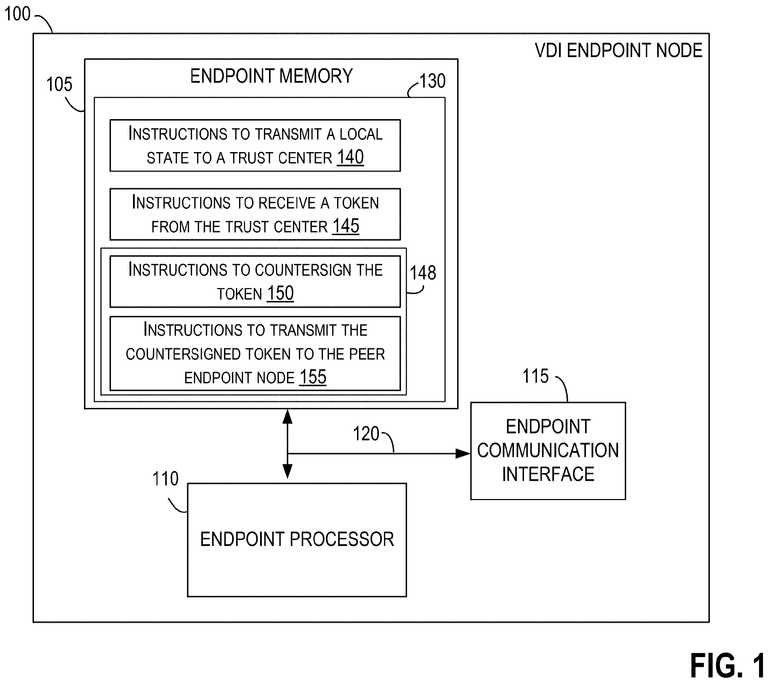

FIG. 1 illustrates a virtual desktop infrastructure (VDI) endpoint node 100 according to some examples. In the illustrated example, the VDI endpoint node 100 includes an endpoint memory 105, an endpoint processor 110, and an endpoint communication interface 115. The endpoint memory 105, the endpoint processor 110, and the endpoint communication interface 115 are communicatively coupled via an endpoint communication bus 120. Although illustrated as a single processor, the endpoint processor 110 may include multiple processing cores, more than one processor, distributed processors, application specific integrated circuit(s) (ASIC(s)), field-programmable gate array(s) (FPGA(s)), or the like. Similarly, the endpoint memory 105 may include one memory or may include multiple memories. The endpoint communication bus 120 may include a shared bus, a collection of individual communication lines, or a combination thereof to enable communication between the endpoint memory 105, the endpoint processor 110, and the endpoint communication interface 115.

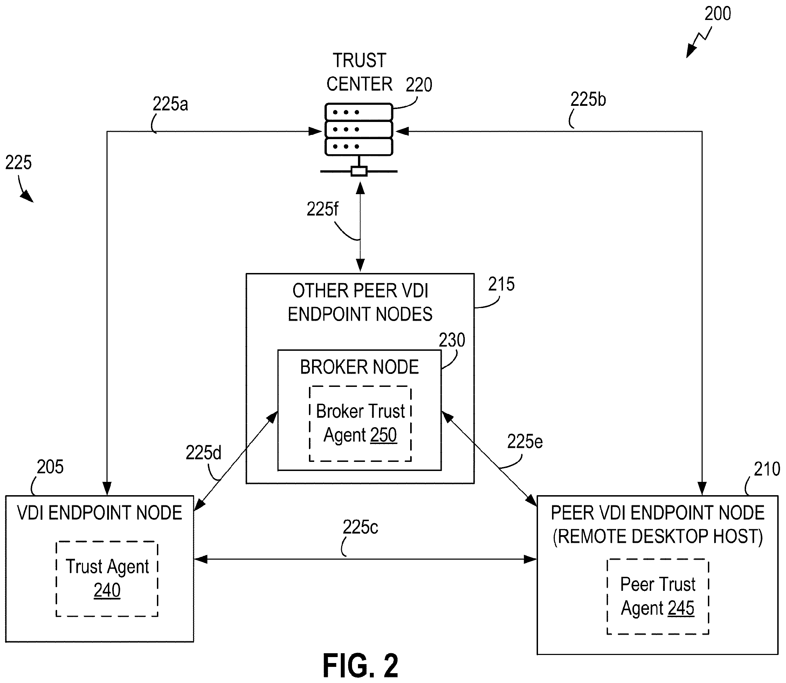

The endpoint memory 105 may be a nontransitory computer readable medium that stores endpoint instructions 130. The endpoint processor 110 may retrieve and execute the endpoint instructions 130 to carry out the functionality of the VDI endpoint node 100 described herein. For example, the endpoint processor 110 may execute the endpoint instructions 130 to implement a trust agent. As illustrated, the endpoint instructions 130 include instructions to transmit a local state of the VDI endpoint node 100 to a trust center via the endpoint communication interface 115 (instructions 140). The local state may include properties for trust policy assessment, as discussed in further detail below. The endpoint instructions 130 also include instructions to receive, from the trust center, a token based on an evaluation of the local state by the trust center via the endpoint communication interface 115, the token being signed by trust center (instructions 145), and instructions to establish a communication link with a peer VDI endpoint node (instructions 148). The instructions 148 may include instructions to countersign the token (instructions 150) and instructions to transmit the countersigned token to a peer endpoint node (instructions 155). In some examples, the endpoint processor 110 may execute the instructions 140, 145, 148, 150, and/or 155 of the endpoint instructions 130 to implement the trust agent. For example, the trust agent, via execution of the endpoint instructions 130, may enable the VDI endpoint node 100 to participate in a peer-to-peer token exchange architecture, as discussed in further detail below (e.g., with respect to FIGS. 2, 5, and 6).

In some examples, the instructions 148 (and, thus, the endpoint instructions 130) include additional instructions, which may also be executed by the endpoint processor 110 as part of implementing the trust agent. For example, the instructions 148 may further include instructions for the VDI endpoint node to receive, from the peer VDI endpoint node, a countersigned peer token; instructions for the VDI endpoint node to validate the countersigned peer token, and instructions for the VDI endpoint node to, in response to validating the countersigned peer token, establish the communication link, where the communication link includes a remote desktop session with the peer VDI endpoint node. In this case, the peer VDI endpoint node may be serving as a remote desktop host, while the VDI endpoint node 100 may be serving as client (e.g., a thin client or zero client) in the remote desktop session. In some cases, the peer VDI endpoint node is a broker node in a virtual desktop infrastructure, as discussed further below. In some cases, the VDI endpoint node 100 is a broker node or a host endpoint node in a virtual desktop infrastructure, as discussed further below.

In some examples, the VDI endpoint node 100 also includes human machine interface components. The human machine interface components may include, for example, a display, a keyboard, a mouse, a trackpad, a microphone, a camera, or the like that may be connected to the endpoint processor 110 via the endpoint communication bus 120. Each of the human machine interface components may be integrated into a housing of VDI endpoint node 100 or may be connected as peripheral devices (e.g., via a cable or wireless link).

The endpoint instructions 130 may also include client-side virtual desktop instructions to enable the VDI endpoint node 100 to serve as a terminal or an interface to the remote desktop host during a remote desktop session. For example, via execution of the client-side virtual desktop instructions, during a remote desktop session with a remote desktop host, the endpoint processor 110 may receive, via the endpoint communication interface 115, session data for display or output via the human machine interface components; may receive, via the human machine interface components, user input; and may transmit, via the endpoint communication interface 115, the user input to the remote desktop host.

The endpoint communication interface 115 enables the VDI endpoint node 100, as well as the endpoint processor 110 and trust agent thereof, to communicate with external components (e.g., over a communication network). For example, the endpoint communication interface 115 may include a transceiver to enable the VDI endpoint node 100 to communicate over the communication network, for example, according to a protocol of the communication network. The communication network(s) that may connect the VDI endpoint node 100, via the endpoint communication interface 115, to the external components and may include wired and/or wireless communication networks. Portions of the communication networks can be implemented using a wide area network (WAN), such as the Internet, a local area network (LAN), such as a Bluetooth^{™} network or Wi-Fi, and combinations or derivatives thereof. In some examples, the communication network represents a direct wireless link between two components (e.g., via a Bluetooth^{™} or Wi-Fi link). These external components may include peer endpoint node(s), a trust center, as well as other components.

FIG. 2 illustrates a network environment 200 implementing a zero trust architecture, according to some examples. The network environment 200 may also be referred to as a trust system implementing a zero trust architecture. The network environment 200 includes an VDI endpoint node 205, a peer VDI endpoint node 210, other peer VDI endpoint nodes 215, and a trust center 220. The VDI endpoint nodes 205, 210, 215 and the trust center 220 are communicatively coupled via communication links 225, separately identified as links 225a-f. The communication links 225 may be links over a communication network, such as the communication network(s) described with respect to FIG. 1. That is, any of the communicative couplings illustrated in FIG. 2 may occur over a wired link, a wireless link, or combinations thereof. As examples of wired links, the communicative couplings may include Universal Serial Bus (USB) links, optical connections, Ethernet links, FireWire or other IEEE 1394-type links, High-Definition Multimedia Interface (HDMI) links, proprietary links, combinations thereof, or any communication link that transmits information via a physical coupling. As examples of wireless links, the communicative couplings may include Wi-Fi, Bluetooth, wireless optical communication, (e.g., Li-Fi), combinations thereof, or any other communication link that transmits information without a physical coupling. Further, the communication links 225 may also be referred to collectively as a communication network, even though the communication network may include multiple different networks, protocols, and transmission technologies. In some examples, the network environment 200 also includes an external policy engine (not shown) connected to the trust center 220 by another communication link similar to the communication links 225.

Each of the VDI endpoint nodes in the network environment 200 may implement a trust agent. More particularly, the VDI endpoint node 205 may implement a trust agent 240, the peer VDI endpoint node 210 may implement a peer trust agent 245, and a broker node 230 (of the other peer VDI endpoint nodes 215) implement a broker trust agent 250. As previously explained in reference to FIG. 1, trust agents 240, 245, and 250 may be software agents provided by a processor of each respective VDI endpoint node 205, 210, 215 executing corresponding instructions for each respective trust agent 240, 245, 250. For instance, the trust agent 240 may be an example of the trust agent of the VDI endpoint node 100 in FIG. 1 and may perform similar functionality, in some examples of the network environment 200. The trust agents 240, 245, and 250 may enable the VDI endpoint nodes 205, 210, 215 to communicate with the trust center 220 and with one another to participate in a peer-to-peer token exchange architecture. As described in further detail below, the peer-to-peer token exchange architecture may include the VDI endpoint nodes 205, 210, 215 respectively providing local state information to the trust center 220, the trust center 220 evaluating the respective local state information and issuing respective tokens to each VDI endpoint node 205, 210, 215, and may include the VDI endpoint nodes 205, 210, 215 countersigning the received tokens and exchanging the countersigned tokens on-demand and periodically to establish and maintain secure communication links among one another.

The VDI endpoint node 205 is, for example, a client endpoint that establishes a remote desktop session with the peer VDI endpoint node 210 serving as a remote desktop host. In some examples, the VDI endpoint node 205 may be, for example, the VDI endpoint node 100 of FIG. 1. In some examples, the VDI endpoint node 205 may be a zero-client device or a thin-client device. A zero-client device is an end-user device that is used to connect to a remote desktop host (e.g., the peer VDI endpoint node 210) with a centralized computing infrastructure and that does not store underlying data from a virtual session with the remote desktop host locally. Rather, for example, the remote desktop host and centralized computing infrastructure share pixel data representing display content for the remote desktop host, which the zero-client receives and displays locally (e.g., on a display screen of the zero-client device). A thin-client device is also an end-user device used to connect to a remote desktop host with a centralized computing infrastructure. However, in contrast to a zero-client device, a thin-client device may have select additional resources, while still relying on the remote desktop host resources for data storage and applications. For example, a thin client may include a standalone operating system for basic functions when disconnected from the centralized computing infrastructure, may store configuration settings in flash memory, or may include similar limited or minimal resources. For example, a thin client may execute an operating system to enable launch of a web browser locally, and the web browser may serve as an interface to the remote desktop host. In some of these examples, a client device (e.g., the VDI endpoint node 205) and a remote desktop host (e.g., the VDI peer endpoint node 210) may communicate over the communication link 225c to provide a remote desktop session using the PC-over-IP (PCoIP) protocol or another remote display protocol. The terms remote desktop and virtual desktop may be used interchangeably herein; similarly, a virtual desktop session and a remote desktop session may be used interchangeably. As used herein, the term "remote desktop session" will be used to refer to a session in which a client device exchanges data with an agent device, which may be either a physical or virtual machine. As used herein, the term "virtual desktop session" will be used to refer to a session in which a client device exchanges data with an agent device that is a virtual machine.

The other peer VDI endpoint nodes 215 may include a broker node 230 (also referred to as a broker VDI endpoint node), as well as additional VDI endpoint nodes. The broker node 230 is configured to broker or link client devices to remote desktop host devices to enable remote desktop sessions. For example, the VDI endpoint node may transmit a request to the broker node 230 to identify an available remote desktop host, and the broker node 230 may respond with an identification of a particular remote desktop host that is available (e.g., the peer VDI endpoint node 210), which may be selected from a plurality of potential remote desktop hosts. In some examples, the broker node 230 may also transmit an identification of the requesting client device (e.g., the VDI endpoint node 205) to the identified remote desktop host so that both the client device and the remote desktop host are aware of one another and can proceed to establish a remote desktop session based at least in part on the identifications. In some examples, the other peer VDI endpoint nodes 215 may include additional VDI endpoint nodes as well, such as, for example, additional client endpoint nodes, additional host endpoint nodes, and additional broker nodes, each of which may include a trust agent and may communicate with the trust center 220 and other peer nodes using the peer-to-peer token exchange techniques described herein.

The VDI endpoint nodes 205, 210, 215 may be software agent nodes (e.g., executing independent of particular hardware or processors), may be hardware nodes (e.g., computing devices including a processor, memory, and communication interface), such as, for example, the VDI endpoint node 100 illustrated in FIG. 1, or may be a combination of software agent nodes and hardware nodes.

In some examples, the VDI endpoint nodes 205, 210, 215 may be trusted devices, meaning the devices have been provisioned with additional security features (e.g., at the time of manufacture or when onboarding into the network environment 200) that make them more secure or trustworthy, relative to devices that do not have the additional security features. The additional security features may include, for example, manufacturer-approved hardware components, a locked-down operating system protected from unauthorized updates, an initial root of trust certification based on a manufacturer or other certificate authority, an endpoint operational certification unique to the endpoint device and assigned based on the initial root of trust certification, and/or a trust center operational certificate that is unique to the trust center 220 and binds the endpoint to the trust center 220. In some examples, such trusted devices may be permitted additional capabilities in remote desktop sessions, may be assigned tokens with longer valid time periods before expiration, and/or provided other privileges based on their additional trustworthiness relative to other devices that are not trusted devices. In some examples, VDI endpoint nodes that are trusted devices include zero-client devices that have been provisioned with such additional security features, while other VDI endpoint nodes (e.g., zero-client devices without the additional security features, thin-client devices, host agents, broker nodes, or other hardware with a trust agent executing thereon) are not considered trusted devices. These zero-client devices may also be referred to as trusted zero clients.

As described in further detail herein, the trust center 220 may issue tokens, also referred to as trust tokens, to the VDI endpoint nodes 205, 210, 215 to enable peer-to-peer token exchange between the endpoint nodes for establishing secure connections between the endpoint nodes. As used herein, a secure connection between two endpoint nodes refers to a connection that has been established between the two endpoint nodes that abides by the trust policies of the zero trust architecture described herein, and more particularly, abides by the respective trust policies of each of the two endpoint nodes and the trust center. As used herein, establishing a communication link between two endpoint nodes refers to establishing a secure connection. As also described further herein, the tokens issued by the trust center 220 may be signed by the trust center 220. As used herein, signed data or communication (e.g., signed tokens and countersigned tokens) refers to cryptographically signed data or communications. For example, signed data or communications may include encrypting such data or communications using a private key linked to the entity signing the data or communication (e.g., via a certificate granted by a trusted certificate authority). The encrypted data or communications may then be decrypted using a public key corresponding to the private key (e.g., known or obtainable by a recipient of the signed data or communication). Because the private key can be presumed to be known only by the sender (or another trusted entity), the recipient can presume that the data or communication is actually sent by the sender or trusted entity (rather than an imposter) when the public key successfully decrypts the data or communication.

The trust center 220 may be a computing device or a collection of computing devices implementing a software service. For example, the trust center 220 may be a cloud-implemented component in which the functionality of the trust center 220 is carried out by distributed computing resources (e.g., remote server(s)) working together (e.g., via execution of software on the distributed computing resources). In other examples, the trust center 220 is implemented on a local network computing device or a collection of local network computing devices (e.g., local server(s)) working together (e.g., via execution of software on the local network computing devices). The trust center 220 may also be referred to as a trust center service or trust center node. The trust center 220 may be associated with endpoint nodes of the network environment 200. For an endpoint node to be associated with the trust center 220, the trust center 220 may store an identifier of the endpoint node, the endpoint node may store an identifier of the trust center 220, and the endpoint node and the trust center 220 may be configured to communicate with one another. For example, the endpoint node may have or store an operational certificate corresponding to the trust center 220 (e.g., issued by the trust center 220 or a certificate authority trusted or known to the trust center 220) that enables the endpoint node to communicate with the trust center 220.

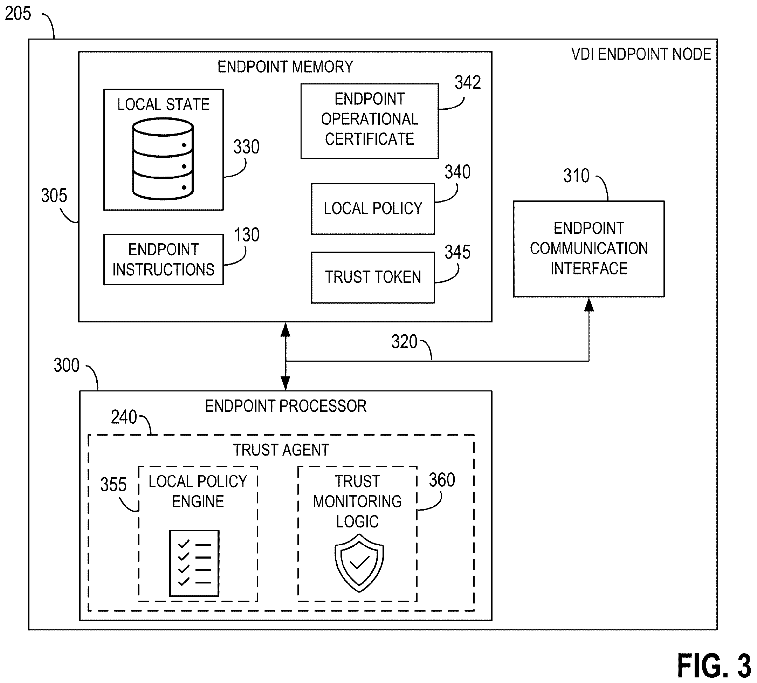

FIG. 3 illustrates an example of the VDI endpoint node 205 in further detail, according to some examples. The VDI endpoint node 205 includes an endpoint processor 300, an endpoint memory 305, and an endpoint communication interface 310 that are communicatively coupled by an endpoint communication bus 320. The description of the endpoint memory 105, the endpoint processor 110, the endpoint communication interface 115, and the endpoint communication bus 120 of FIG. 1 similarly applies to the endpoint processor 300, the endpoint memory 305, the endpoint communication interface 310, and the endpoint communication bus 320. Relative to the like-named components of FIG. 1, the endpoint processor 300 and the endpoint memory 305 of FIG. 3 include additional elements, as illustrated.

The endpoint memory 305 includes the endpoint instructions 130 (described with respect to FIG. 1), a local state 330, an endpoint operational certificate 342, a local policy 340, and a trust token 345. The local state 330 may include properties for trust policy assessment. As used herein, properties for trust policy assessment should be understood as a set of properties (e.g., hardware (HW)-based properties, operating system (OS)-based properties, context-based properties, etc.) used to determine a trust level (e.g., a trust score) of an endpoint node. In some examples, the trust policy assessment is conducted remote to the endpoint node (e.g., by a trust center). The assessment may be based on the set of properties (or a subset of properties) part of the local state associated with the endpoint node. For example, the local state 330 may include the following properties, a subset of the following properties, as well as additional properties: a connection status indicating whether the VDI endpoint node 205 is online (e.g., connected to the Internet, a local area network, or another network), a configuration status indicating parameters of a current applied configuration state of the VDI endpoint node, an applied configuration status indicating a configuration status indicating whether a current applied configuration state of the VDI endpoint node 205 matches an intended configuration state (e.g., whether precise parameters of the endpoint node currently forming the current applied configuration state of the VDI endpoint node 205 matches desired parameters of an intended configuration state as intended or desired by a system administrator), a version status indicating whether a software version of software of the VDI endpoint node 205 (e.g., software implementing the trust agent 240, software for implementing remote desktop sessions, an operating system of the VDI endpoint node 205, etc.) is up-to-date, a peripheral status indicating whether allow-listed or deny-listed peripheral devices (e.g., a USB, RS-232, or firewire device) is/are present (e.g., wired or wirelessly coupled to the VDI endpoint node 205), a certificate status indicating whether the VDI endpoint node 205 has an expired or otherwise invalid endpoint certificate (e.g., whether the endpoint operational certificate 342 is invalid or expired), an attestation status indicating whether the VDI endpoint node 205 failed remote attestation (e.g., whether a trust center or other endpoint node has indicated to the VDI endpoint node 205 that the VDI endpoint node 205 failed to meet an expected policy), a location status indicating whether a geographic location of the VDI endpoint node 205 is within a defined boundary, an internet protocol (IP) address status indicating whether an internet protocol (IP) address of the VDI endpoint node 205 is allow-listed (e.g., on a list of permissible IP addresses) or deny-listed (e.g., on a list of impermissible IP addresses), an approved node status indicating whether the VDI endpoint node 205 satisfies custom trust relationships (e.g., whether the VDI endpoint node 205 is connected to an approved node of a list of permissible nodes), a network connection status indicating whether the VDI endpoint node 205 is connected via the endpoint communication interface 310 to a permitted or valid type of network connection (e.g., Wi-Fi, copper, fiber, 5G, LTE), a time constraint status indicating whether the VDI endpoint node 205 is within permissible time constraints (e.g., time of day constraints, time limit constraints, and/or calendar period constraints that are defined), a latency status indicating whether the VDI endpoint node 205 is operating within permissible latency constraints, an alive status indicating whether the VDI endpoint node 205 is responding to keep-alive messages, a virus status indicating whether an anti-virus and/or rootkit scanner is reporting no issues (e.g., no substantive issues), a trust failure status indicating whether externally reported trust failures have occurred (e.g., no external system or security information and event management (SIEM) has detected a condition that makes the VDI endpoint node 205 untrusted), among other properties. In some examples, the local state 330 further includes underlying data used to generate the properties of local state 330. For example, the local state 330 may include the geographic location of the VDI endpoint node 205 as well as an indication of whether the geographic location is outside of a defined boundary.

The local policy 340 may specify the various properties and thresholds used to evaluate conditions or data of the VDI endpoint node 205 to generate the local state 330. For example, the local policy 340 may specify which of the above-example properties are to be included in the local state 330, may specify a defined boundary in which the geographic location of the VDI endpoint node is to be, may specify time of day constraints, may specify a list of clients or nodes for the custom trust relationship evaluation, etc. Additionally, the local policy 340 may specify properties for a peer endpoint node (see, e.g., the peer VDI endpoint node 210 of FIG. 2) to satisfy to enable a secure connection (e.g., a communication link for a remote desktop session or for data exchange) with the VDI endpoint node 205.

The endpoint operational certificate 342 may include a certificate issued by a trusted organization and used by the VDI endpoint node 205 to generate signed data or communications (e.g., countersigned tokens, communications to the trust center with the local state 330, etc.). In some examples, the endpoint operational certificate 342 is issued by a trust center (e.g., the trust center 220 of FIG. 2) to which the VDI endpoint node 205 is associated. In other examples, the endpoint operational certificate 342 may be issued by a certified entity during manufacturing (e.g., a verified factory which is entitled to issue certified certificates). In some examples, the endpoint operational certificate 342 includes a private key. The VDI endpoint node 205 may use the private key to generate signed data or communications (e.g., by generating a hash of the data or communication using the private key). The private key may correspond to a public key available and/or known to peer endpoint nodes and the trust center. The public key may be used by the peer endpoint nodes and the trust center to decrypt and authenticate communications and data from the VDI endpoint node signed using the private key. In some examples, the endpoint operational certificate 342 is generated by the trust center 220 (FIG. 2) based on an initial root of trust certification of the trust center 220. The endpoint operational certificate 342 may be unique to the VDI endpoint node and, thus, usable by peer endpoint nodes and the trust center to identify and authenticate communications and data from the VDI endpoint node 205. In some examples, the trust center provides new endpoint operational certificates to the VDI endpoint node 205 that are stored as the endpoint operational certificate 342 (overwriting the previous certificate).

The trust token 345, also referred to simply as the token 345, is generated and issued by a trust center (e.g., the trust center 220) to which the VDI endpoint node 205 is associated. The trust center may periodically issue tokens to the VDI endpoint node 205 (e.g., in response to requests from the VDI endpoint node). Accordingly, the token 345 may represent a current or most recently received token of the VDI endpoint node 205, and may be updated as new tokens are received from the trust center.

The token 345 may be signed by the trust center 220. For examples, as discussed in further detail below, the trust center may sign the token 345 using a private key of the trust center.

The particular contents of the token 345 may vary by implementation. In some examples, the token 345 may be generated by the trust center to include any combination of the local state 330 (or a portion thereof), the local policy 340, a security policy that the trust center applied when evaluating the local state 330, a result of the evaluation by the trust center (e.g., a trust level), permissions resulting from the evaluation of the local state 330 (e.g., a permission level), or the like. The token 345 may further include an expiration event set by the trust center, which defines when the token 345 expires. The expiration event may be an expiration time (e.g., an indication of a time and date at which the token 345 will expire). The expiration time may vary by token and can be set to cause the token to expire after, for example, 5 minutes, 10 minutes, 15 minutes, 30 minutes, 1 hour, 8 hours, 12 hours, 24 hours, or another value. The particular length of time to expire may vary based on a determined trustworthiness of the VDI endpoint node 205 (e.g., by the trust center), security policies of the network environment 200, and other factors, as discussed further below with respect to token generation by the trust center. The expiration event may alternatively or additionally include other conditions or measurable constraints that are measurable or evaluable by endpoint nodes, referred to expiration conditions or expiration constraints. For example, the expiration event may include a round trip latency constraint that defines an acceptable round trip latency time for the VDI endpoint node 205 (e.g., 1 millisecond, 5 milliseconds, 15 milliseconds, 25 milliseconds, 50 milliseconds, etc.). Then, for example, when the VDI endpoint node 205 or a peer endpoint node communicating with the VDI endpoint node 205 determines that the round trip latency of a communication therebetween exceeds the round trip latency constraint, the token 345 expires. In some examples, the issuance of the token 345 by the trust center may be interpreted by the VDI endpoint node 205 (and other endpoint nodes) as an indication that the trust center evaluated the VDI endpoint node 205 (or the local state 330 and/or local policy 340 thereof) as satisfying the policy that is included in the token. By selecting or configuring different expiration events for tokens, a trust center 220 (or an operator thereof) may tune a network environment (e.g., the network environment 200) to achieve different security levels and network traffic or bandwidth levels. For example, to increase security, shorter expiration times may be used and/or more stringent expiration conditions or constraints may be used. However, with shorter expiration times, endpoint nodes (e.g., the VDI endpoint node 205) may request new tokens more frequently, increasing network traffic and bandwidth used, as well as processing by the trust center (e.g., for token generation). The traffic, bandwidth, and processing further increase as the number of endpoint nodes increases. To reduce network traffic, network bandwidth used, and trust center processing, the expiration times may be set longer and/or less stringent expiration conditions or constraints may be used.

The endpoint processor 300 executes the endpoint instructions 130 to implement the trust agent 240. The trust agent 240 further includes a local policy engine 355 and trust monitoring logic 360. When a function is described herein as carried out by the local policy engine 355 or the trust monitoring logic 360, the function may also be described as being carried out by the trust agent 240, by the endpoint processor 300, or by the VDI endpoint node 205. Also, it should be noted that, although the trust agent 240 is represented as part of the endpoint processor 300, the trust agent 240 is not necessarily a separate hardware component but, rather, the result of the endpoint processor 300 executing the endpoint instructions 130.

The local policy engine 355 may generate the local state 330 and store the local state 330 in the endpoint memory 305. To generate the local state 330, the local policy engine 355 may determine characteristics of the VDI endpoint node and the local policy 340, and may apply the local policy 340 to the characteristics to generate the local state 330. For example, to determine the characteristics of the VDI endpoint node, the endpoint processor 300 may receive sensor data, may access or read data from the endpoint memory 305, may access a clock function to obtain a current time, may request information from other software executing on the endpoint processor 300 or VDI endpoint node 205, among other techniques. The characteristics may be or represent the underlying information (e.g., time of day, geographic location, software version, IP address, peripheral device list, online status, etc.) against which the local policy engine 355 applies the local policy 340 to generate the properties that make up the local state 330. In some examples, the characteristics or a subset of characteristics are included as properties that make up the local state 330. To apply the local policy 340 to the determined characteristics, the local policy engine 355 may, for example, compare the characteristics to respective thresholds, lists, or the like to generate the properties of the local state 330.

The trust monitoring logic 360 may communicate, via the endpoint communication interface 310, with the trust center corresponding to the VDI endpoint node (e.g., the trust center 220) and with peer endpoint nodes (e.g., the VDI peer endpoint nodes 210, 215)) to request and exchange tokens. For example, the trust monitoring logic 360 may transmit a request for a token to the trust center, where that request includes the local state 330. The trust monitoring logic 360 may also sign the local state 330 (separately or as part of the overall request) based on the endpoint operational certificate 342. For example, to sign the local state 330, the trust monitoring logic 360 may apply the private key of the endpoint operational certificate 342 to the local state to encrypt the local state 330. In this way, the trust center can attest whether the local state 330 comes from a trustworthy endpoint node.

Additionally, as described in further detail below, to establish a secure connection with a peer endpoint node (e.g., the peer endpoint nodes 210, 215), the trust monitoring logic 360 may countersign the token 345 (issued by the trust center) to generate a countersigned token and transmit the countersigned token to the peer endpoint node. Additionally, to establish the secure connection, the trust monitoring logic 360 may further evaluate and validate a peer token (e.g., a countersigned token) received from the peer endpoint node, as discussed further below. The trust monitoring logic 360 may also determine a permission level for the secure connection based on evaluating the peer token. The secure connection may be, for example, a communication link for a remote desktop session or used for other communications. In some examples, the permission level determined by the trust monitoring logic 360 may define the capabilities of the VDI endpoint node 205 with respect to a peer endpoint node (e.g., the peer endpoint nodes 210, 215).

As noted, relative to the like-named components of FIG. 1, the endpoint processor 300 and the endpoint memory 305 of FIG. 3 include additional elements. These additional elements may also be present in some examples of the VDI endpoint node 100 of FIG. 1. In some examples, the VDI endpoint node 205 includes human machine interface (HMI) components. The HMI components include, for example, a display, a keyboard, a mouse, a trackpad, a microphone, a camera, or the like. Each of the human machine interface components may be integrated into a housing of VDI endpoint node 205 or may be connected as peripheral devices (e.g., via a cable or wireless link).

Although FIG. 3 illustrates an example of the VDI endpoint node 205, in some examples, the peer VDI endpoint node 210, the nodes of the other peer VDI endpoint nodes 215, or a combination thereof may include a similar arrangement as illustrated and described with respect to FIG. 3, although the particular local states, endpoint operational certificates, local policies, and/or trust tokens may be unique to the particular node. Accordingly, the peer VDI endpoint nodes 210 and 215, and the trust agents thereof, may similarly provide a local state to the trust center, receive a signed token from the trust center, countersign the token, exchange countersigned tokens with other peer endpoint nodes (including the VDI endpoint node 205), and evaluate and validate countersigned tokens to establish secure connections with the other peer endpoint nodes.

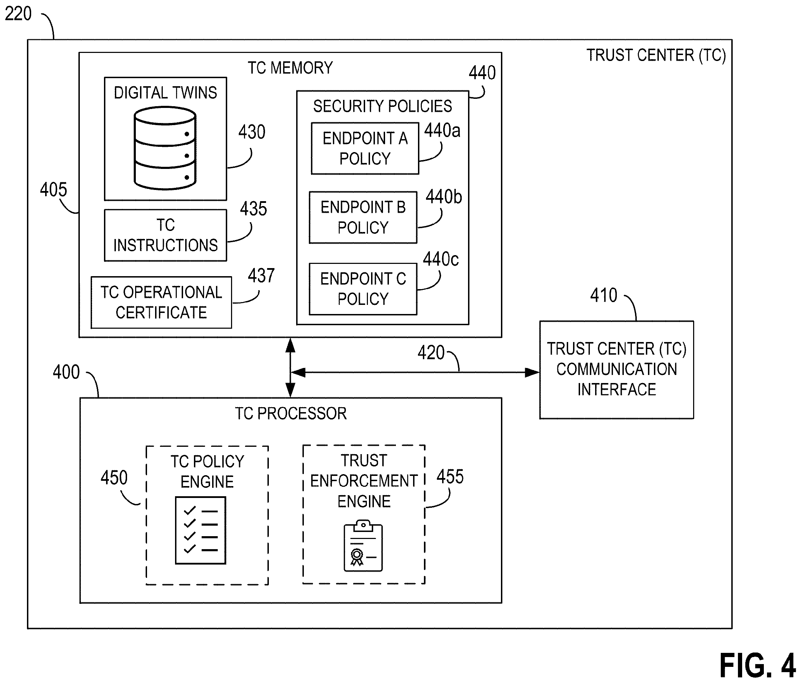

FIG. 4 illustrates an example of the trust center 220 in further detail, according to some examples. The trust center 220 includes a trust center (TC) processor 400, a TC memory 405, and a TC communication interface 410 that are communicatively coupled by a TC communication bus 420. Although illustrated as a single processor, the TC processor 400 may include multiple processing cores, more than one processor, distributed processors, application specific integrated circuit(s) (ASIC(s)), field-programmable gate array(s) (FPGA(s)), or the like. Similarly, the TC memory 405 may include one memory or may include multiple memories. The TC communication bus 420 may include a shared bus, a collection of individual communication lines, or a combination thereof to enable communication between the TC memory 405, the TC processor 400, and the TC communication interface 410.

The TC memory 405 may be a nontransitory computer readable medium that stores digital twins 430, TC instructions 435, TC operational certificate 437, and TC security policies 440. The TC security policies 440 may include a plurality of security policies for endpoint nodes (e.g., the VDI endpoint nodes 205, 210, and 215 of FIG. 2).

The digital twins 430 may include a local state of each endpoint node associated with the trust center 220. For example, with reference also to FIGS. 2 and 3, the VDI endpoint node 205 may transmit the local state 330 to the trust center 220. Similarly, the peer VDI endpoint node 210 and each of the peer VDI endpoint nodes 215 may also provide a copy of their respective local states to the trust center 220. Each such local state may be similar to the local state 330 described with respect to the VDI endpoint node 205 in that each local state may include properties of the corresponding endpoint node (e.g., as generated by a trust agent of that endpoint node). However, the particular properties and values thereof may vary by endpoint node. The trust center 220 (e.g., the TC processor 400) may receive these local states via the TC communication interface 410 and store the local states as the digital twins 430, where each digital twin of the digital twins 430 corresponds a local state of one of the endpoint nodes. The endpoint nodes may be configured to transmit their respective local states periodically or each time a property of their local state changes. Accordingly, the digital twin of the digital twins 430 that corresponds to a particular endpoint node may reflect a current state of the endpoint node and serve as a "twin" of the endpoint node, for purposes of trust evaluation.

The TC instructions 435 may include computer executable instructions that are executed by the TC processor to carry out the functionality of the trust center 220 described herein. For example, the TC instructions 435 may include instructions to receive and store local states as the digital twins 430 and, as described further below, instructions to implement a TC policy engine 450 and a trust enforcement engine 455.

The TC operational certificate 437 may include a certificate issued by a trusted organization and used by the trust center 220 to generate signed data or communications (e.g., signed tokens). In some examples, the TC operational certificate 437 is issued by a manufacturer or developer of the trust center 220. In some examples, the TC operational certificate 437 includes a private key. The trust center 220 may use the private key to generate signed data or communications (e.g., by generating a hash of the data or communication using the private key). The private key may correspond to a public key, where the public key is available and/or known to endpoint nodes associated with the trust center 220 (e.g., the VDI endpoint nodes 205, 210, 215). The public key may be used by the endpoint nodes to decrypt and authenticate communications and data from the trust center 220 signed using the private key. The TC operational certificate 437 may be unique to the trust center 220 and, thus, usable by endpoint nodes to identify and authenticate communications and data from the trust center 220.

As illustrated, the TC security policies 440 include three security policies: an endpoint A policy 440a, an endpoint B policy 440b, and an endpoint C policy 440c. However, in other examples, the TC security policies 440 may include additional or fewer security policies. In some examples, the TC security policies 440 includes a unique security policy for each endpoint node associated with the trust center 220. In some examples, the TC security policies 440 include several types of security policies, and each endpoint node associated with the trust center 220 may be assigned one of the types of security policies, where some endpoint nodes (e.g., of a similar type or circumstance) may be assigned the same security policy selected from the available security policies. For example, with reference also to FIG. 2, the endpoint A policy 440a may be associated with the VDI endpoint node 205, the endpoint B policy 440b may be associated with the peer VDI endpoint node 210, and the endpoint C policy 440c may be associated with the broker node 230 in some scenarios. However, in other scenarios, the endpoint A policy 440a may apply to the VDI endpoint nodes 205 and 210, and the endpoint B policy 440b may apply to the broker node 230, or another association of policies may be used. In some examples, the TC security policies 440 includes a lookup table or other index that links each endpoint node, or type of endpoint node (endpoint node type), associated with the trust center 220 with a particular security policy of the TC security policies 440. In some other examples, the TC security policies 440 may be specific to an endpoint type of the VDI endpoint node.

As used herein, an endpoint node type, or endpoint type, may refer to the type of node as defined by the hardware and/or software implementing the node. Example endpoint types may include a zero-client device, a thin-client device, desktop computer, laptop computer, mobile device, network printer, additional host device, tablet, audio conference device, video conference device, audio-video conference device, security camera, speaker, microphone, display, software node, personal digital assistants (PDA), single board computer (SBC), Internet-of-Things (IoT) device, wearable device, or the like.

Each of the TC security policies 440 may specify various properties and thresholds used to evaluate conditions or data of an endpoint node to evaluate security or trustworthiness of the endpoint node. For example, the endpoint A policy 440a (as well as other security policies of the TC security policies 440) may specify which properties of the endpoint node are to be evaluated, may specify a defined boundary in which the geographic location of an endpoint node is to be, may specify time of day constraints, may specify a list of clients or nodes for the custom trust relationship evaluation, etc. The security policies of the TC security policies 440 may be more restrictive or less restrictive than the local policies of the corresponding endpoint nodes in terms of thresholds, boundaries, or other metrics, and may include evaluations or more or fewer properties of the endpoint nodes than the local policies of the corresponding endpoint nodes. In some examples, different policies may be associated with different endpoint node types. As previously explained, some endpoint types may be provisioned with additional security features that make them more secure or trustworthy, relative to devices that do not have the additional security features. Accordingly, specific types of endpoint nodes which are considered as having a lower degree of trustworthiness may be subject to more stringent policies.

The TC processor 400 executes the TC instructions 435 to implement a TC policy engine 450 and a trust enforcement engine 455. When a function is described herein as carried out by the TC policy engine 450 or the trust enforcement engine 455, the function may also be described as being carried out by the TC processor 400 or the trust center 220.

The TC policy engine 450 may perform and/or coordinate trust policy assessments. For example, the TC policy engine 450 may retrieve digital twins from the digital twins 430, retrieves security policies from the TC security policies 440, evaluates whether the digital twins are in compliance with its respective security policies, and determines a trust level for the endpoint nodes based on the evaluation. For example, with reference also to FIGS. 2-3, the TC policy engine 450 may retrieve the local state 330 from the digital twins 430, may retrieve the endpoint A policy 440a, and may evaluate whether the local state 330 is in compliance with the endpoint A policy 440a, and determine a trust level for the VDI endpoint node 205 based on the evaluation. The trust level may be a binary assessment (e.g., trust or distrust), or may include a level selected from multiple levels (e.g., a trust level selected from low trust, medium trust, or high trust or other discrete levels; a numerical trust level between 1-10 or another range; etc.).

In some examples, the TC policy engine 450 communicates with an external policy engine (not shown) in place of or to supplement an internal trust assessment by the trust center 220. For example, the TC policy engine 450 may transmit, via the TC communication interface 410, a request to an external policy engine that includes the digital twin (e.g., the local state 330) of the endpoint node being evaluated, or a subset of the digital twin relevant to an assessment to be performed by the external policy engine. The external policy engine may receive the request via a network coupled to the TC communication interface 410. The external policy engine may evaluate the digital twin (or subset thereof) using an applicable security policy of the external policy engine, and provide a result of the evaluation to the TC policy engine 450 via the TC communication interface 410. The external policy engine may be a software service executing on a remote system, and/or may be implemented by a third party (e.g., which may have access to additional information used in a trust assessment). The result of the evaluation may serve as the trust level of the TC policy engine 450 for the particular endpoint node, or the TC policy engine 450 may use the result of the evaluation in combination with other local evaluation results (and/or with results of other external policy engines) to generate the trust level for an endpoint node. For example, the various evaluation results may be summed, weighted and summed, averaged, or the like to generate a composite score that serves as the trust level. In some examples, where the trust level is binary, the trust level may be set to distrust if, a particular number, a particular subset, or a particular one of the evaluated properties of the applied security policy(ies) evaluates negatively (e.g., indicating a lack of trust or security risk). The trust level ultimately generated by the TC policy engine 450 may be used for token generation by the trust enforcement engine 455.

The trust enforcement engine 455 generates tokens for endpoint nodes based on the trust levels generated by the TC policy engine 450. To generate the token, the trust enforcement engine 455 may bundle or group together information including, for example, the digital twin of the particular endpoint node (e.g., the local state 330) or a portion thereof, the local policy applied by the endpoint node (e.g., the local policy 340), the security policy of the TC security policies 440 (e.g., the endpoint A policy 440a), the trust level generated by the TC policy engine 450 or other results of the evaluations performed or outsourced by the TC policy engine 450, and/or additional token data. The particular combination of information included may vary by implementation. In some examples, the digital twin of the particular endpoint node is not included in the token, or a portion of the digital twin is included. In such examples, the token may include the trust level resulting from the evaluation of the digital twin. In some examples, the token may include the trust level evaluation results, or other of the aforementioned examples of information. However, having the digital twin information available on the token issued by the trust center adds an extra layer of security, as the endpoint node receiving the token can attest whether the digital twin data included in the token corresponds with its local state (e.g., local state 330).

As previously mentioned, the token issued by the trust center 220 may include additional token data. In an example, the token may include an expiration event (e.g., an expiration time, condition, or constraint). In other examples, the token may include the trust level determined for the endpoint node, permissions for the endpoint node, an issue time indicating when the token was issued, a trust center identifier, an endpoint node identifier, or the like.

The trust enforcement engine 455 may then sign the bundle the appropriate information to create the token. To sign the bundled information, the trust enforcement engine 455 may sign using the TC operational certificate 437. For example, the trust enforcement engine 455 may sign the bundled information using a private key of the TC operational certificate 437 (e.g., by generating a hash of the bundled information using the private key).

Additionally, the trust level and/or other endpoint node information (e.g., from the digital twin) may be used by the trust enforcement engine 455 to set certain values or parameters of the token that is generated. For example, the trust enforcement engine 455 may set the expiration event (e.g., the expiration time, condition, or constraint) and/or permissions of the additional token data of the token based on the trust level determined by the TC policy engine 450 and/or based on a type of endpoint node (e.g., as determined from the digital twin of the endpoint node). For example, the higher the trust level, the longer the expiration time may be set, such that a token may remain valid for longer periods of time for endpoint nodes that have a higher trust level than those that have a lower trust level. Similarly, the higher the trust level, the more permissions that the trust enforcement engine 455 may grant to the endpoint node. For example, the trust enforcement engine 455 may indicate in the token that that the endpoint node should be permitted to access certain types of data, to engage in certain types of communications (e.g., remote desktop sessions), to upload certain types of data, etc. Ultimately, a peer endpoint node that receives a token with such permissions may still determine whether to grant such permissions; however, in some examples, the peer endpoint node can be configured to adopt or rely on the granted permissions of the trust center 220.

In some examples, the trust level generated by the TC policy engine 450 may also be used by the trust enforcement engine 455 to determine whether to generate a token for the endpoint node that corresponds to the trust level evaluation. For example, when the trust level for the VDI endpoint node is determined to be below a certain threshold or set to distrust, the TC policy engine 450 may determine not to generate a token for the VDI endpoint node. Conversely, when the trust level for the VDI endpoint node is determined to be above a certain threshold or set to trust, the TC policy engine 450 may determine to generate a token for the VDI endpoint node.

In some examples, the trust enforcement engine 455 may broadcast a notification of a change in trust level for a particular endpoint node. For example, in response to the TC policy engine 450 determining that a trust level for a particular endpoint node has changed from trust to distrust (or otherwise decreased to indicating less trustworthiness), the trust enforcement engine 455 may broadcast a notification to the endpoint nodes associated with the trust center 220, or a subset of endpoint nodes associated with the trust center 220 (e.g., those with an elevated security policy). The notification may include an identifier of the endpoint node having the changed trust level and an indication of the change in trust level.

The trust center 220 may issue tokens for each endpoint node associated with the trust center 220 such that the endpoint nodes may then proceed with peer-to-peer token exchanges. This enables the endpoint nodes to attest to their trustworthiness and to evaluate peer endpoint nodes attestations without further communications with the trust center 220, effectively decentralizing and distributing security functions to the endpoint nodes. This distribution reduces network traffic, trust center processing, and potential bottlenecks that may otherwise result at a centralized trust center, and enables the overall system to more effectively scale larger while maintaining security.

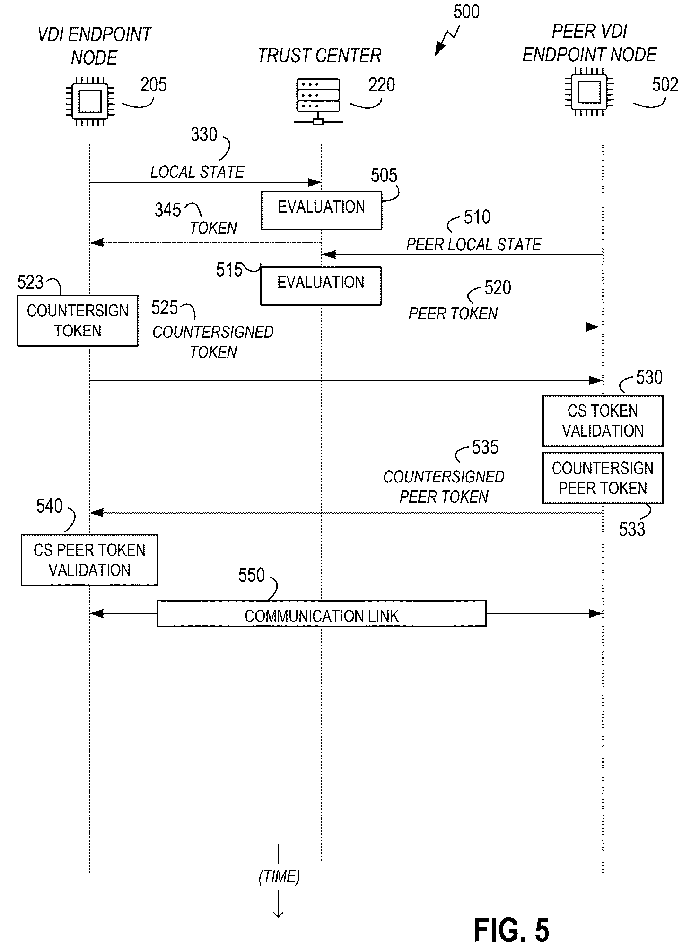

FIG. 5 illustrates a sequence diagram 500 with a sequence of operations of a token exchange within a network environment (e.g., the network environment 200) including the VDI endpoint node 205, the trust center 220, and a peer VDI endpoint node 502. It should be noted that, for illustrative purposes, additional components of the network environment have been omitted. As illustrated, the sequence of operations in FIG. 5 results in establishing a communications link between the VDI endpoint node 205 and the peer VDI endpoint node 502. The peer VDI endpoint node 502 may be an example of the peer VDI endpoint node 210, the broker node 230, or another endpoint node (e.g., of the other VDI endpoint nodes 215).

In the diagram 500, the VDI endpoint node 205 transmits the local state 330 of the VDI endpoint node 205 to the trust center 220. The local state 330 is described further with respect to FIG. 3 and includes properties of the VDI endpoint node 205 and may be signed by the VDI endpoint node 205. The trust center 220 then evaluates the local state at block 505. For example, as discussed with respect to FIG. 4, the trust center 220 may store the local state 330 as a digital twin in the digital twins 430 and the TC policy engine 450 may generate a trust level by applying a security policy to the local state 330. The trust center 220 (e.g., the trust enforcement engine 455 of FIG. 4) may then generate a token (e.g., the token 345) based on the trust level and may transmit the token 345 to the VDI endpoint node 205. As previously explained, the token generated by the trust center 220 is signed by the trust center 220 and may include an evaluation of the local state 330 by the trust center 220.

Similarly, the peer VDI endpoint node 502 transmits a peer local state 510 of the peer VDI endpoint node 502 to the trust center 220. The peer local state 510 is a local state of the peer VDI endpoint node 502, and may be similar to the local state 330 in form and structure, but includes properties and information of the peer VDI endpoint node 502. The trust center 220 may store the peer local state 510 as a digital twin in the digital twins 430. Additionally, the TC policy engine 450 may generate a trust level for the peer VDI endpoint node 502 (also referred to as a peer trust level) by applying a security policy of the TC security policies 440 to the peer local state 510, as discussed with respect to FIG. 4. As also discussed with respect to FIG. 4, the particular security policies respectively applied to the local state 330 and the peer local state 510 may be the same, may be based on a type of endpoint node, or may be particular to the VDI endpoint nodes 205, 502. The trust center 220 (e.g., the trust enforcement engine 455 of FIG. 4) may then generate a peer token 520 based on the peer trust level (as discussed with respect to FIG. 4) and may transmit the peer token 520 to the VDI endpoint node 205. The peer token 520 may be generally similar to the token 345, but particular to the peer VDI endpoint node 502 (e.g., including the peer local state 510, a local policy of the peer VDI endpoint node 502, the security policy applied by the trust center 220 to the peer local state 510, the peer trust level assigned by the trust center 220 to the peer VDI endpoint node 502, an identifier of the peer VDI endpoint node 502, an expiration event (e.g., expiration time, condition, or constraint) particular to the peer token 520, etc.). It should be noted that, as previously explained in reference to other examples, different types of endpoint nodes may be associated with different security policies of the TC security policies 440.

The VDI endpoint node 205, at some point after receipt of the token 345, may determine to establish a communication link with peer VDI endpoint node 502 (e.g., for a remote desktop session, data transfer, or other communications). For example, the VDI endpoint node 205 may determine to initiate the communication link or remote desktop session in response to a received user input (e.g., via HMI components of the VDI endpoint node 205). In some examples, the VDI endpoint node 205 may determine to establish the communication link specifically with the peer VDI endpoint node 502 where the peer VDI endpoint node 502 is an example of the peer VDI endpoint node 210 implementing a host endpoint node based on previous communications with the broker node 230. In some examples, the VDI endpoint node 205 may determine to establish the communication link with the peer VDI endpoint node 502 where the peer VDI endpoint node 502 is an example of the broker node 230 to identify a host endpoint node (e.g., the VDI endpoint node 210) for a remote desktop session.

To establish the communication link, in block 523, the VDI endpoint node 205 generates a countersigned token 525 and, as illustrated in the diagram 500, transmits the countersigned token 525 to the peer VDI endpoint node 502. To generate the countersigned token 525, the VDI endpoint node 205 (e.g., the trust monitoring logic 360) may bundle additional information with the token 345 issued by the trust center 220 and sign the bundle of the token 345 and additional information. To sign the bundle, the VDI endpoint node 205 may use the private key (e.g., of the endpoint operational certificate 342) to generate a hash of the bundle. Thus, in some examples, the VDI endpoint node 205 may countersign the token 345 using an operational certificate obtained (e.g., from the trust center 220) during an onboarding of the VDI endpoint node 205 (e.g., into the network environment 200 and/or with the trust center 220). The additional information may include a current time, an identifier of the VDI endpoint node as sender, an identifier of the peer VDI endpoint node 502 as recipient, among other information. Accordingly, the countersigned token 525 may be specific or unique to the recipient (e.g., the peer VDI endpoint node 502) and/or the communication link intended to be established because of this additional information (e.g., at least because the identifier of the recipient or current time). By having the countersigned token 525 specific to the peer VDI endpoint node 502, an additional layer of security for the data exchange between the VDI endpoint node 205 and the VDI endpoint node 502 may be implemented. For example, a recipient of the countersigned token 525 can confirm the sender identity, the recipient identity, time of countersigning, to authenticate the countersigned token 525. In other examples, the countersigned token 525 may be generic and not specific to the intended recipient.

The peer VDI endpoint node 502 receives the countersigned token 525 and, in block 530, validates the countersigned token 525. To validate the countersigned token 525, the peer VDI endpoint node 502 may evaluate the countersigned token 525 using a similar technique as the VDI endpoint node uses in block 540 discussed below.

Additionally, in block 533, the peer VDI endpoint node 502 generates a countersigned peer token 535 and transmits the countersigned peer token 535 to the VDI endpoint node 205. In some examples, the peer VDI endpoint node 502 generates and transmits the countersigned peer token 535 in response to receipt of the countersigned token 525 or in response to validating the countersigned token 525. To generate the countersigned peer token 535, the peer VDI endpoint node 502 may perform a similar process as the VDI endpoint node 205 uses to generate the countersigned token 525. Accordingly, the countersigned peer token 535 may be specific or unique to the VDI endpoint node 205 and the communication link intended to be established.

The VDI endpoint node 205 receives the countersigned peer token 535 and, in block 540, validates the countersigned peer token 535 (e.g., via the trust monitoring logic 360). To validate the countersigned peer token 535, the VDI endpoint node 205 may decrypt the countersigned peer token 535 using a public key associated with the peer VDI endpoint node 502 to reveal the peer token 520 generated by the trust center 220 and the additional information added by the peer VDI endpoint node 502. Further, as the peer token 520 may be signed by the trust center 220, the VDI endpoint node 205 may decrypt the peer token 520 using a public key associated with the trust center 220. The VDI endpoint node 205 may evaluate the revealed contents of the countersigned peer token 535 and the peer token 520 to ensure that the peer VDI endpoint node 502 is trustworthy and satisfies the policies of the VDI endpoint node. For example, the VDI endpoint node 205 may authenticate an operational certificate and identity of the peer VDI endpoint node 502 by successfully decrypting the countersigned peer token 535 using the public key associated with the peer VDI endpoint node 502. Additionally, the VDI endpoint node 205 may authenticate an operational certificate and identity of the trust center 220 by successfully decrypting the peer token 520 using the public key associated with the trust center 220. That is, if one or both of the public key does not work to decrypt the countersigned peer token 535 or the peer token 520, the VDI endpoint node 205 may presume that the peer VDI endpoint node 502 or the trust center 220, as the case may be, is an imposter. Additionally, the VDI endpoint node 205 may confirm that the (decrypted) countersigned peer token 535 indicates the identity of the peer VDI endpoint node 502 as sender, the identity of the VDI endpoint node 205 as recipient. Further, the VDI endpoint node 205 may determine and confirm that the peer token 520 is still active, meaning an expiration event (e.g., an expiration time, condition, or constraint) has not occurred. For example, the VDI endpoint node 205 may determine that the expiration time of the peer token 520 has not yet been reached and, accordingly, the peer token 520 is active.

When the VDI endpoint node 205 is unable to confirm that the peer token 520 is still active, is unable to confirm the proper sender and recipient identifies in the countersigned peer token 535, or is unable to authenticate the operational certificates or identifies of both the peer VDI endpoint node 502 and the trust center 220, the VDI endpoint node 205 may indicate that the countersigned peer token 535 is invalid. In such a case, the VDI endpoint node 205 may end the process, attempt to establish a communication link with another peer endpoint node, or may proceed with the communication link with restricted or limited capabilities or permissions (e.g., restricting access to certain data and/or applications, restricting the ability to upload data, preventing download of certain data from a peer VDI endpoint node, preventing transmission of private data to a peer VDI endpoint node, preventing access to a specific website, or preventing access to a peripheral device connected to the peer VDI endpoint node). Certain data, as used in this context, refers to a particular set of data, which may include a particular type of data, data created by a particular author, data with a particular characteristic or security setting, a combination thereof, or another identifiable set of data. Similarly, certain applications, as used in this context, refers to a particular set of applications, which may include a particular type of application, an application that enables access to particular data, an application with a particular characteristic or security setting, a combination thereof, or another identified set of applications. In some examples, when the VDI endpoint node 205 determines that the countersigned peer token 535 is invalid, the VDI endpoint node 205 may additionally or alternatively prevent future connections or connection attempts with the peer VDI endpoint node 502. In some examples, the network environment 200 (e.g., the various peer endpoint nodes therein) may be configured with policies such that, when the token 345 of the VDI endpoint node 205 is expired or otherwise invalid, the VDI endpoint node 205 is prevented from forming connections with certain peer endpoint nodes that can serve as VDI remote desktops and/or permitted to form connections with certain peer endpoint nodes that have reduced security thresholds and/or fewer available applications, data, or services.

In block 540, in addition to confirming the peer token 520 is active, confirming sender and recipient identities, and confirming the sources of the countersigned peer token 535 and peer token 520, the VDI endpoint node 205 may evaluate additional content of the (decrypted) peer token 520. For example, the VDI endpoint node 205 may evaluate the (decrypted) content of the peer token 520 including, for example, the peer local state 510, the peer trust level assigned by the trust center 220, the permissions assigned by the trust center 220, the local policy applied by the peer VDI endpoint node 502, and/or the security policy applied by the trust center 220. As a result of the evaluation, the VDI endpoint node 205 may determine or assign a permission level for the communication link 550 for interacting with the peer VDI endpoint node 502 (e.g., via a communication link 550 such as a remote desktop session). The permission level may, for example, dictate an access level to certain data and/or applications by either or both endpoint nodes, an ability to upload data by either or both endpoint nodes, among other restrictions on interactions between the endpoint nodes. To determine the permission level, the VDI endpoint node 205 may evaluate the content of the peer token 520, the content of the token 345, or both. With respect to evaluating the content of the peer token 520, the VDI endpoint node 205 may, for example, apply or compare the local policy 340 to the peer local state 510, to the local policy applied by the peer VDI endpoint node 502, and/or to the security policy applied by the trust center to determine whether the same or a more restrictive policy has been applied to the peer VDI endpoint node 502. The VDI endpoint node 205 may assign the permission level based on this application or comparison. For example, the VDI endpoint node 205 may set the permission level to be less restrictive when the VDI endpoint node 205 determines that the same or a more restrictive policy has been applied, and may set the permission level to be more restrictive when the VDI endpoint node 205 determines that a less restrictive policy has been applied. In some examples, the VDI endpoint node 205 may indicate that the countersigned peer token 535 is invalid when a less restrictive policy has been applied. In some examples, the VDI endpoint node 205 may use the trust level and/or permissions set by the trust center 220 and included in the peer token 520 or the token 345 as the assigned permission level or permissions. The VDI endpoint node 205 using the trust level and/or permissions set by the trust center 220 and included in the token 345 as the assigned permission level or permissions is an example of the VDI endpoint node 205 evaluating the token 345 to determine the permission level. Accordingly, using these various techniques, each endpoint node in the network environment 200 may attest to its own authenticity using tokens issued by the trust center 220, and may perform its own security assessment of a peer endpoint node.

After both the VDI endpoint node 205 and the peer VDI endpoint node 502 have respectively validated the countersigned peer token 535 and the countersigned token 525 in block 530 and 540, the VDI endpoint node 205 and the peer VDI endpoint node 502 establish a communication link 550. In some examples, additional checks may also be performed as part of establishing the communication link 550 (e.g., in parallel or in series with the described process) such as, for example, additional checks for initiating a VDI desktop connection related to client/server version checks, protocol support checks, certificate validation of a remote desktop server, etc. The communication link 550 may also be referred to as a secure communications link or a trusted communications link, as it is established as a result of the peer-to-peer token exchange and validation techniques described herein. As used herein, such an established communications link between peer devices is distinct from individual transmissions occurring between the peer devices that may occur before establishing the communication link (e.g., the token exchanges or other preliminary handshaking transmissions that enable the token exchanges), although the individual transmissions and the communication link may occur over the same physical network resources. Such transmissions that occur before the communication link is established may be referred to as pre-link communications.

In some examples, the VDI endpoint node 205 and the peer VDI endpoint node 502 may have different permissions and capabilities corresponding to the communications link 550. For example, because the VDI endpoint node 205 and the peer VDI endpoint node 502 each perform respective validations of respective countersigned tokens, each may apply different permissions or restrictions to the other node or to itself to enable or limit communications and/or operations using the communications link 550. Thus, as one illustrative example of different permissions, the VDI endpoint node 205 may be permitted to access applications at the peer VDI endpoint node 502, while the peer VDI endpoint node 502 may not be permitted access to applications at the VDI endpoint node 205. In other examples, other permissions may be granted or not granted for each endpoint node, such as the other permissions discussed herein. Thus, the permissions may be applied unidirectionally to endpoint nodes linked via the process illustrated in FIG. 5. By applying unidirectional permissions, the system is provided with additional flexibility compared to systems where both endpoint nodes are associated with the same permissions without compromising the overall security.

The communications link 550 may be used for a remote desktop session or as part of establishing a remote desktop session. For example, the VDI endpoint node 205 may serve as a client device and the peer VDI endpoint node 502 may serve as a remote desktop host (e.g., like the peer VDI endpoint node 210) in a remote desktop session, as previously described with respect to FIG. 2. In such examples, establishing the communications link 550 may include initiating a remote desktop session between the VDI endpoint node 205 (as client node) and the peer VDI endpoint node 502 (as remote desktop host). Additionally, in such examples, the communications link 550 may be said to include a remote desktop session, as the communications link 550 may include the communications between a client and host during a remote desktop session. Additionally, in such cases, after both the VDI endpoint node 205 and the peer VDI endpoint node 502 have respectively validated the countersigned peer token 535 and the countersigned token 525 in block 530 and 540, the VDI endpoint node 205 and the peer VDI endpoint node 502 may be said to establish a remote desktop session. In some examples, the VDI endpoint node 205 may serve as a client device and the peer VDI endpoint node 502 may serve as a broker node (e.g., like the broker node 230), as previously described with respect to FIG. 2. In such an example, the VDI endpoint node 205 may transmit a request to establish a remote desktop session over the communications link 550, and the peer VDI endpoint node 502 may reply with an identify of a host endpoint node (e.g., the peer VDI endpoint node 210) that the VDI endpoint node 205 may connect with for a remote desktop session. In some examples, the communications link 550 between the VDI endpoint nodes 205 and 502 may be a secure or trusted communications link used for other purposes unrelated to a remote desktop session such as, for example, downloading data, uploading data, communications, audio or video streaming, audio or video conferencing, or the like. Additionally, the sequence diagram 500 may also apply and be implemented by the trust center 220 with endpoint nodes other than VDI endpoint nodes (e.g., non-VDI endpoint nodes) to establish a communication link 550 between such non-VDI endpoint nodes (e.g., used for downloading data, uploading data, communications, audio or video streaming, audio or video conferencing, etc.).

Although the diagram 500 illustrates the VDI endpoint node 205 transmitting the local state and receiving the token before the peer VDI endpoint node 502 transmits the peer local state and receives the peer token, the order may also be reversed such that the peer VDI endpoint node 502 transmits the peer local state and receives the peer token before the VDI endpoint node 205 transmits the local state and receives the token, or these operations may overlap in time. Similarly, the order of the transmission of the countersigned tokens and validation by the endpoint nodes may be reversed or may overlap in time.

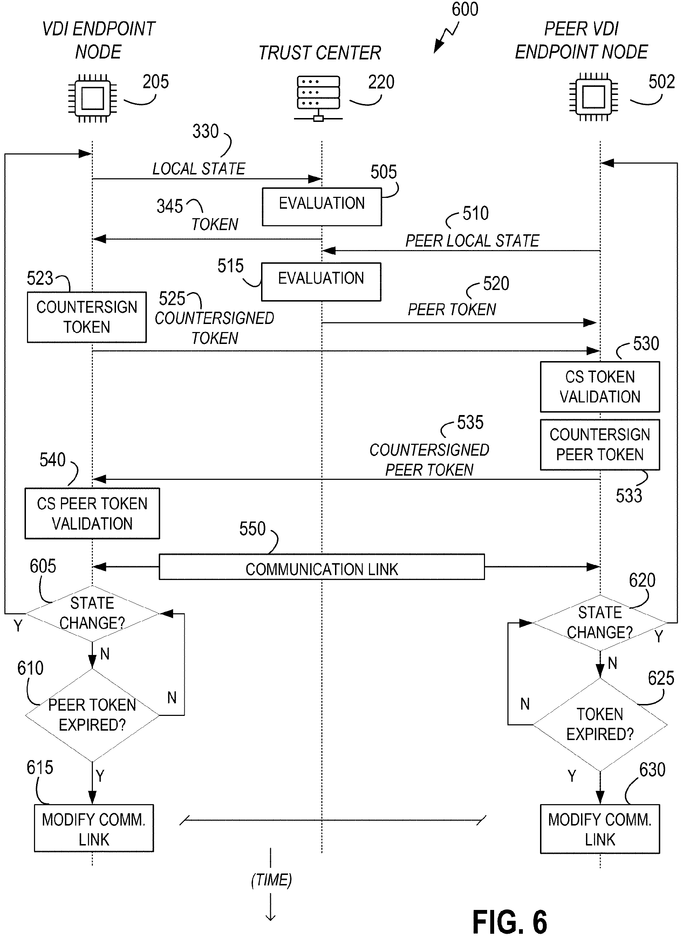

FIG. 6 illustrates a sequence diagram 600 with a sequence of operations within a network environment (e.g., the network environment 200) including the VDI endpoint node 205, the trust center 220, and the peer VDI endpoint node 502. The sequence diagram 600 includes the operations and elements of the sequence diagram 500, as well as additional operations and elements following the establishment of the communication link 550. Accordingly, the discussion of these similar aspects above for the sequence diagram 500 is also applicable for the sequence diagram 600 and is not restated.

In the sequence diagram 600, following establishment of the communication link 550, each of the VDI endpoint node 205 and the peer VDI endpoint node 502 may perform a series of additional operations. The following discussion will focus on the additional blocks 605, 610, and 615 of the VDI endpoint node 205; however, the discussion is similarly applicable to the blocks 620, 625, and 630 of the peer VDI endpoint node 502.

In block 605, the VDI endpoint node 205 determines whether the local state 330 has changed. For example, with reference to FIG. 3, the local policy engine 355 may periodically determine characteristics of the VDI endpoint node 205 and the local policy 340, or detect changes thereto, and may apply the local policy 340 to the characteristics to update the local state 330, similar to generating the local state 330 described above with respect to FIG. 3. Upon updating the local state 330, the VDI endpoint node 205 may determine that the local state 330 has changed in block 605. In response, the VDI endpoint node 205 may return to the top of the diagram 600 to again provide the (updated) local state 330 to the trust center 220 to request a new token. The trust center 220 may evaluate the (updated) local state 330 in block 505, as previously described, and generate a new token, similar to the token 345 previously generated, but updated based on the new evaluation (e.g., and potentially including a new expiration event or time). The new token may be received and stored by the VDI endpoint node 205 as the token 345. The VDI endpoint node 205 may generate a new countersigned token 525 based on the new token, and provide the countersigned token 525 to the peer VDI endpoint node 502. The peer VDI endpoint node 502 may validate the countersigned token 525 in block 530 and either maintain the communication link 550 (e.g., based on a successful validation) or modify the communication link 550 based on the evaluation of the countersigned token 525. In some examples, modifying the communication link 550 may include severing or terminating the communication link 550, for example, when the peer VDI endpoint node 502 is unable to validate the countersigned token 525 or the evaluation of the countersigned token 525 indicates that the VDI endpoint node 205 is less trustworthy than before (e.g., has a lower permission level). In some examples, modifying the communication link 550 may include reducing the permissions of the VDI endpoint node 205 when the evaluation of the countersigned token 525 indicates that the VDI endpoint node 205 is less trustworthy than before (e.g., has a lower permission level) or increasing the permissions of the VDI endpoint node 205 when the evaluation of the countersigned token 525 indicates that the VDI endpoint node 205 is more trustworthy than before (e.g., has a higher permission level). In examples in which the communication link 550 includes a remote desktop session, the modification(s) may be applied to the remote desktop session.

In some examples, in block 605, the VDI endpoint node 205 may additionally or alternatively determine that the token 345 is near an expiration event (e.g., within a certain time of an expiration time of the token 345). In response to such a determination, the VDI endpoint node 205 may consider such a determination a state change and return to the top of the diagram 600 as previously discussed. In this way, the VDI endpoint node 205 may obtain a new token before expiration of the token 345 to avoid interruption of the communication link 550.

When the peer VDI endpoint node 502 determines that the peer local state 510 has changed or that the peer token 520 is near an expiration event, similarly, the peer VDI endpoint node 502 may return to the top of the diagram 600, ultimately leading to a new countersigned peer token 535 being provided to the VDI endpoint node 205 for validation in block 540. In such a case, the VDI endpoint node 205 may validate the countersigned peer token 535 in block 540 and either maintain the communication link 550 (e.g., based on a successful validation) or modify the communication link 550 based on the evaluation of the countersigned peer token 535 that occurs in block 540. As discussed with respect to the peer VDI endpoint node 502, modifying the communication link 550 may include severing or terminating the communication link 550, reducing the permissions of the peer VDI endpoint node 502 , or increasing the permissions of the peer VDI endpoint node 502.

When the VDI endpoint node 205 determines no change in the local state 330 in block 605, the VDI endpoint node 205 proceeds to block 610 to determine whether the peer token 520 has expired. For example, the VDI endpoint node 205 may compare a current time with an expiration time of the peer token 520 to determine whether the peer token 520 has expired. As another example, the VDI endpoint node 205 may determine whether another expiration event defined in the peer token 520 has occurred to determine whether the peer token 520 has expired such as, for example, when a round trip latency exceeds a round trip latency constraint (e.g., which can indicate an unresponsive endpoint or other communication issue) or when another measurable constraint is exceeded. When the peer token 520 has not expired, the VDI endpoint node 205 may return to block 605. When the peer token 520 has expired, the VDI endpoint node 205 may proceed to block 615 to modify the communication link 550. In some examples, the blocks 610, 615, 625 and 630 are not included in the sequence of operations implemented by the components illustrated in FIG. 6.

In block 615, the VDI endpoint node 205 may modify the communication link 550 according to, for example, predetermined settings (e.g., stored in the endpoint memory 305), a type of the peer VDI endpoint node 502, the local policy 340, the trust level indicated in the peer token 520, or the permission level associated by the VDI endpoint node 205 to the peer VDI endpoint node 502 as a result of the validation in block 540. For example, to modify the communication link 550, the VDI endpoint node 205 may sever or terminate the communication link 550 or may reduce the permissions of the peer VDI endpoint node 502 and/or the VDI endpoint node 205 within the communication link 550. When permissions are modified, the modified permissions may be applied unidirectionally such that one endpoint node may have permissions reduced while the other endpoint node does not have permissions reduced or has permissions reduced to a different level. In examples in which the communication link 550 includes a remote desktop session, such modifications would similarly apply to the remote desktop session of the communication link 550. After modifying the link in block 615, if the communication link 550 remains active, the VDI endpoint node may return to block 605. Additionally, upon receipt of a new countersigned peer token 535, the VDI endpoint node 205 may return to block 540 to validate the countersigned peer token 535 and, potentially, modify the communication link 550 to increase the permissions of the peer VDI endpoint node 502 and/or the VDI endpoint node 205 (e.g., to return to the permissions that existed prior to expiration of the peer token 520).

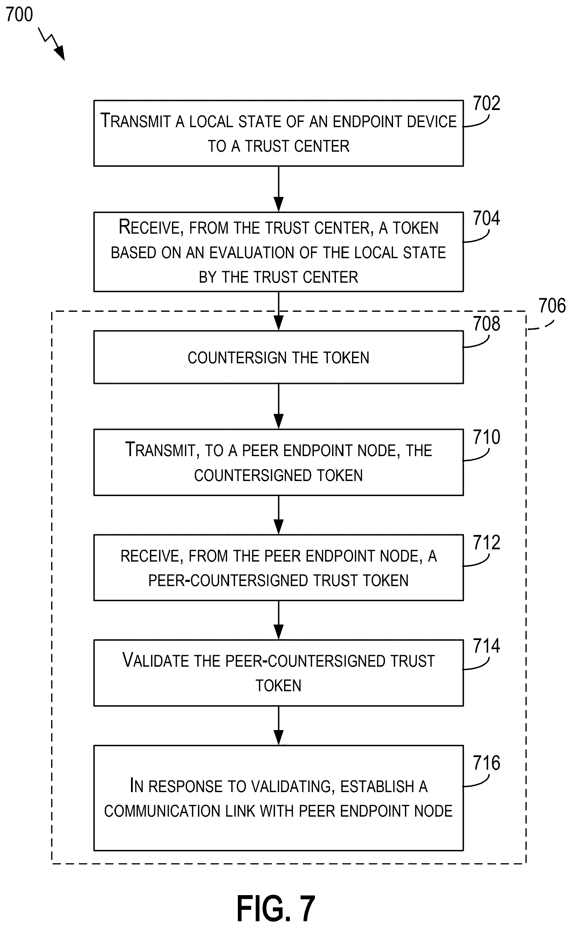

FIG. 7 is a flowchart illustrating an example method 700 for establishing a communication link according to some implementations of the disclosure. The method 700 is described in the following paragraphs as being performed by the VDI endpoint node 205 and, in particular, the endpoint processor 300 of the VDI endpoint node 205. However, the method 700 can also be performed by the VDI endpoint node 205 in different forms than illustrated in FIG. 3, by other endpoint nodes (e.g., the peer VDI endpoint node 210, one of the other VDI endpoint nodes 215, the peer VDI endpoint node 502, or a non-VDI endpoint node) and processors thereof, and/or by other devices, processors, or nodes. Additionally, although the method 700 may be illustrated and described as having operations executed in a particular order, in some examples, certain of the operations can be executed in a different order or in parallel (in whole or in part). Further, although generally described as being performed by a processor (e.g., the endpoint processor 300), this processor may include multiple processors (e.g., as a part of a distributed processor system or group of cooperating processors).

At block 702, an endpoint node (e.g., the VDI endpoint node 205) transmits a local state of the endpoint node to a trust center, the local state including properties for trust policy assessment. For example, as discussed above with reference to FIGS. 5-6, the VDI endpoint node 205 may transmit the local state 330 to the trust center 220.

At block 704, the endpoint node receives, from the trust center, a token based on an evaluation of the local state by the trust center. The token may be signed by the trust center. For example, as discussed above with reference to FIGS. 5-6, the VDI endpoint node 205 may receive the token 345 from the trust center 220.

At block 706, the endpoint node establishes a communication link. For example, the VDI endpoint node 205 establishes a communication link with the peer VDI endpoint node 502. To establish the communication link, the endpoint node may proceed with blocks 708-716.

At block 708, the endpoint node countersigns the token with an endpoint private key corresponding to the endpoint node to generate a countersigned token. For example, as discussed above with reference to FIGS. 5-6, the VDI endpoint node 205 may generate the countersigned token 525. In some examples, an endpoint private key may be obtained from an endpoint operational certificate (e.g., endpoint operational certificate 342 in FIG. 3).

At block 710, the endpoint node transmits the countersigned token to a peer endpoint node. For example, as discussed above with reference to FIGS. 5-6, the VDI endpoint node 205 may transmit the countersigned token 525 to the peer VDI endpoint node 502.

At block 712, the endpoint node receives, from the peer endpoint node, a countersigned peer token. For example, as discussed above with reference to FIGS. 5-6, the VDI endpoint node 205 may receive the countersigned peer token 535 from the peer VDI endpoint node 502.

At block 714, the endpoint node validates the countersigned peer token. For example, as discussed above with reference to FIGS. 5-6, the VDI endpoint node 205 may validate the countersigned peer token 535 in block 540.

At block 716, in response to validating the countersigned peer token, the endpoint node establishes the remote desktop session with the peer endpoint node. For example, as discussed above with reference to FIGS. 5-6, the VDI endpoint node 205 may establish the communication link 550 with the peer VDI endpoint node 502.

In some examples, the VDI endpoint node 205 may repeat the method 700 in response to determining that a change in the local state 330 occurred, in response to expiration of the token 345, in response to determining that the token 345 is near expiration (e.g., within a threshold amount of time to an expiration time of the token 345), or periodically (e.g., with a predetermined or adjustable cadence). In some examples, establishing a communication link through execution of block 706 in FIG. 7, in response to validating at block 716, includes the endpoint node establishing a remote desktop session with the peer endpoint node (e.g., the peer VDI endpoint node 502) or communicating with the peer endpoint node (e.g., the peer VDI endpoint node 502 implemented as the broker node 230) for identifying a remote desktop host. In some examples, the communications link is used for uploading data to or downloading data from the peer endpoint node, for audio or video streaming, for audio or video conferencing, for other communications with the peer endpoint node, or the like. In some examples, a peer endpoint node (e.g., the peer VDI endpoint node 210, 502, or one of the other VDI endpoint nodes 215) executes the method 700 separately from (but potentially in parallel with) the VDI endpoint node 205 executing the method 700 and, upon completion of block 714 by each of the endpoint nodes, the communication link is formed between the two endpoint nodes.

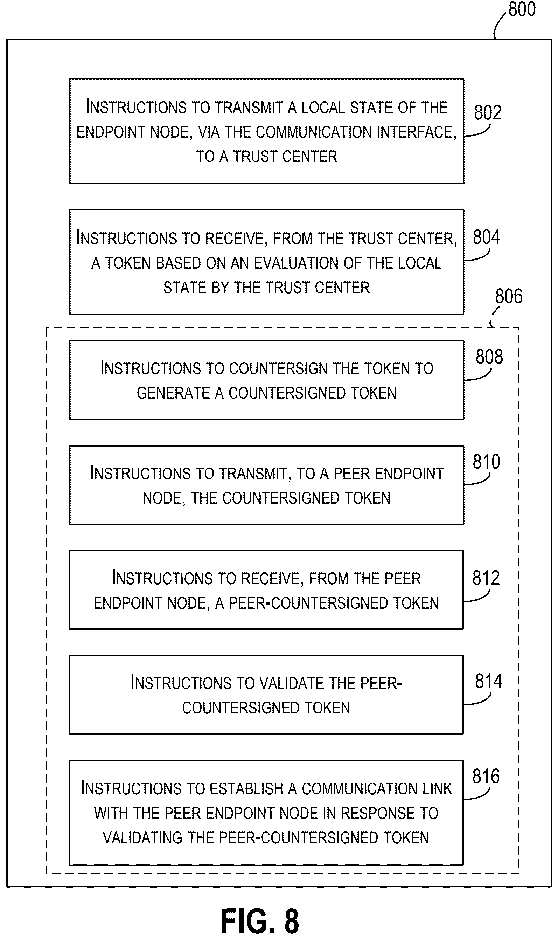

FIG. 8 illustrates a memory 800 according to example implementations of the present disclosure. In some examples, the memory 800 may be incorporated into an endpoint node, such as, for example, the VDI endpoint node 205, the peer VDI endpoint node 210, the peer VDI endpoint node 502, and/or the other peer VDI endpoint nodes 215 (including the broker node 230). The memory 800 is illustrated as having sets of instructions 802-816. The sets of instructions 802-816 are executable by the at least one processor to perform the operations described with respect to the instructions 802-816. The at least one processor may be a processor of the VDI endpoint node 205 (e.g., the endpoint processor 300), the peer VDI endpoint node 210, the peer VDI endpoint node 502, the other peer VDI endpoint nodes 215, and/or another endpoint node (e.g., a non-VDI endpoint node). The memory 800 may be, include, and/or implement a non-transitory computer-readable medium that stores the instructions 802-816 executable by the at least one processor.

As illustrated, the memory 800 includes instructions 802 to transmit a local state of an endpoint node to a trust center. For example, and with reference to FIGS. 3, 5, and 6, the endpoint processor 300 may execute the instructions 802 to cause the VDI endpoint node 205 to transmit the local state 330 to the trust center 220.

The memory 800 further includes instructions 804 to receive, from the trust center, a token based on an evaluation of the local state by the trust center, the token being signed by trust center. For example, and with reference to FIGS. 3, 5, and 6, the endpoint processor 300 may execute the instructions 804 to cause the VDI endpoint node 205 to receive, from the trust center 220, the token 345 based on an evaluation of the local state 330 by the trust center 220 and having been signed by the trust center 220.

The memory 800 further includes instructions 806 to establish a communication link with a peer endpoint node that is to serve as a remote desktop host. For example, and with reference to FIGS. 3, 5, and 6, the endpoint processor 300 may execute the instructions 806 to cause the VDI endpoint node 205 to establish a communication link with the peer VDI endpoint node 502. Further, to establish the communication link, the instructions 806 may include instructions 808-816.

The instructions 808 include instructions to countersign the token to generate a countersigned token. For example, and with reference to FIGS. 3, 5, and 6, the endpoint processor 300 may execute the instructions 808 to cause the VDI endpoint node 205 to countersign the token 345 to generate a countersigned token 525.

The instructions 810 include instructions to transmit, to a peer endpoint node, the countersigned token. For example, and with reference to FIGS. 3, 5, and 6, the endpoint processor 300 may execute the instructions 810 to cause the VDI endpoint node 205 to transmit to the countersigned token 525 to the peer VDI endpoint node 502.

The instructions 812 include instructions to receive, from the peer endpoint node, a countersigned peer token. For example, and with reference to FIGS. 3, 5, and 6, the endpoint processor 300 may execute the instructions 812 to cause the VDI endpoint node 205 to receive the countersigned peer token 535 from the peer VDI endpoint node 502.

The instructions 814 include instructions to validate the countersigned peer token. For example, and with reference to FIGS. 3, 5, and 6, the endpoint processor 300 may execute the instructions 814 to cause the VDI endpoint node 205 to validate the countersigned peer token 535 as described with respect to block 540.

The instructions 816 include instructions to establish the communication link in response to validating the countersigned peer token. For example, and with reference to FIGS. 3, 5, and 6, the endpoint processor 300 may execute the instructions 816 to cause the VDI endpoint node 205 to establish the communication link 550 in response to validating the countersigned peer token 535.

In some examples, the VDI endpoint node 205 may repeat execution of the instructions 802-816 in response to determining that a change in the local state 330 occurred, in response to expiration of the token 345, in response to determining that the token 345 is near expiration (e.g., within a threshold amount of time to an expiration time of the token 345), or periodically (e.g., with a predetermined or adjustable cadence). In some examples, establishing the communication link through execution of instructions 806 in FIG. 8, in response to validating at instructions 816, includes the endpoint node establishing a remote desktop session with the peer endpoint node (e.g., the peer VDI endpoint node 502) or communicating with the peer endpoint node (e.g., the peer VDI endpoint node 502 implemented as the broker node 230) for identifying a remote desktop host. In some examples, the communication link is used for uploading data to or downloading data from the peer endpoint node, for audio or video streaming, for audio or video conferencing, for other communications with the peer endpoint node, or the like. In some examples, the peer endpoint node (e.g., the peer VDI endpoint node 210, 502, or one of the other VDI endpoint nodes 215) executes the instructions 802-816 separately from (but potentially in parallel with) the VDI endpoint node 205 executing the instructions 802-816 and, upon completion of instructions 814 by each of the endpoint nodes, the communication link is formed between the two endpoint nodes.

In some examples, the tokens and countersigned tokens described herein may be a JavaScript^{®} object notation (JSON) token (e.g., a JSON web token (JWT) or a token of another text-based format. The tokens and countersigned tokens may include a header, a payload, and a signature of the trust center or endpoint node that generated the token or countersigned token. In the case of a countersigned token generated by an endpoint node, the payload may include a token generated by the trust center for the endpoint node. The tokens issued by a trust center discussed herein (e.g., the token 345 and the peer token 520) may also be referred to as temporary tokens, trust tokens, or temporary trust tokens as they may be issued with a particular expiration event (e.g., an expiration time, condition, or constraint).

In some implementations, the systems, nodes, and/or processors described herein include agents, engines, and logic. Herein, the terms "agent," "engine," and "logic" are used interchangeably to refer to a hardware processing circuit, which can include any or some combination of a microprocessor, a core of a microprocessor, a microcontroller, a programmable integrated circuit, a programmable gate array, or another hardware processing circuit. Alternatively, an "engine," an "agent," or "logic" can refer to machine-readable instructions (software, software-in-execution, firmware, or combinations thereof) executable on a hardware processing circuit. As another alternative, an "engine," an "agent," or "logic" can refer to a combination of a hardware processing circuit and machine-readable instructions. Further, in some implementations, an "engine" or "agent" may be described as including "modules," which may refer to a portion of the corresponding hardware processing circuit, the corresponding machine-readable instructions executable thereby, or combinations thereof.

Although endpoint nodes described herein (including the VDI endpoint nodes 100, 205, 210, 215, 230, and 502) are described as virtual desktop infrastructure endpoint nodes, in some examples, other (non-VDI) endpoint nodes are employed, in addition to or instead of the VDI endpoint nodes. As used herein, VDI endpoint nodes are endpoint nodes that are part of a virtual desktop infrastructure and used, at least in some examples, within a virtual desktop environment (e.g., as a client in a remote desktop session, as a host in a remote desktop session, or as a broker for enabling remote desktop sessions). Non-VDI endpoint nodes, in contrast, are used for other purposes. In such examples, these non-VDI endpoint nodes and the trust center may still implement peer-to-peer token exchanges similar to as described herein, but the resulting communication link may be used by these peer endpoint nodes for additional purposes other than for virtual desktop sessions. For example, these additional purposes may include data upload, data download, communications, audio streaming, video streaming, audio teleconferencing, video teleconferencing, or the like. In such examples, these endpoint nodes may be, for example, desktop computers, laptop computers, mobile devices (e.g., a cellular phones or smart phones), network printers, additional host devices, tablets, audio conference devices, video conference devices, audio-video conference devices, security cameras, speakers, microphones, displays, software nodes (e.g., software application executing on a computing device connected to or that may connect to the network environment 200), personal digital assistants (PDAs), single board computers (SBCs), Internet-of-Things (IoT) devices, wearable devices, or the like. Additionally, in some examples, the VDI endpoint nodes described herein implement the peer-to-peer token exchanges as described herein with other VDI endpoint nodes or non-VDI endpoint nodes for both implementing virtual desktop sessions as well as for other types of communication links (e.g., communication links for data upload, data download, communications, audio streaming, video streaming, audio teleconferencing, video teleconferencing, or the like). Accordingly, the peer-to-peer token exchange techniques described herein may be used to manage and provide security with respect to various types of computer network environments including virtual desktop infrastructure environments, other (non-VDI) network environments, or combinations thereof.

Certain operations of methods according to the technology, or of systems executing those methods, can be represented schematically in the figures or otherwise discussed herein. Unless otherwise specified or limited, representation in the figures of particular operations in particular spatial order can not imply those operations to be executed in a particular sequence corresponding to the particular spatial order. Correspondingly, certain operations represented in the figures, or otherwise disclosed herein, can be executed in different orders than are expressly illustrated or described, as appropriate for particular examples of the technology. Further, in some examples, certain operations can be executed in parallel, including by dedicated parallel processing devices, or separate computing devices that interoperate as part of a large system.

The disclosed technology is not limited in its application to the details of construction and the arrangement of components set forth in the following description or illustrated in the following drawings. Other examples of the disclosed technology are possible and examples described and/or illustrated here are capable of being practiced or of being carried out in various ways.

A plurality of hardware and software-based devices, as well as a plurality of different structural components can be used to implement the disclosed technology. In addition, examples of the disclosed technology can include hardware, software, and electronic components or modules that, for purposes of discussion, can be illustrated and described as if the majority of the components were implemented solely in hardware. However, in one example, the electronic based aspects of the disclosed technology can be implemented in software (for example, stored on non-transitory computer-readable medium) executable by a processor. Although certain drawings illustrate hardware and software located within particular devices, these depictions are for illustrative purposes. In some examples, the illustrated components can be combined or divided into separate software, firmware, hardware, or combinations thereof. As used herein, "software" and "firmware" are examples of machine-readable instructions. As one example, instead of being located within and performed by a single electronic processor, logic and processing can be distributed among multiple electronic processors. Regardless of how they are combined or divided, hardware and software components can be located on the same computing device or can be distributed among different computing devices connected by a network or other suitable communication links.

The computer-usable or computer-readable mediums described herein may be any suitable non-transitory computer usable. The computer-usable or computer-readable medium may be, for example, but not limited to, an electronic, magnetic, optical, electromagnetic, infrared, or semiconductor system, apparatus, or device. More specific examples (a non-exhaustive list) of the computer-readable medium include the following: a portable computer diskette, a hard disk, a random-access memory (RAM), a read-only memory (ROM), an erasable programmable read-only memory (EPROM or Flash memory), a portable compact disc read-only memory (CD-ROM), an optical storage device, or a magnetic storage device. In the context of this disclosure, a computer-usable or computer-readable medium may be any medium that can contain, store, communicate, or transport the program for use by or in connection with the instruction execution system, apparatus, or device.

As used herein in the context of computer implementation, unless otherwise specified or limited, the terms "component," "system," "module," "block," and the like are intended to encompass part or all of computer-related systems that include hardware, software, a combination of hardware and software, or software in execution. For example, a component can be, but is not limited to being, a processor device, a process being executed (or executable) by a processor device, an object, an executable, a thread of execution, a computer program, or a computer. By way of illustration, both an application running on a computer and the computer can be a component. Components (or system, module, and so on) can reside within a process or thread of execution, can be localized on one computer, can be distributed between two or more computers or other processor devices, or can be included within another component (or system, module, and so on).

## Claims

1. A virtual desktop infrastructure (VDI) endpoint node, comprising:
a memory storing instructions;
a communication interface; and
a processor coupled to the communication interface and to the memory, the processor to execute the instructions to implement a trust agent, the trust agent to:
transmit a local state of the VDI endpoint node, via the communication interface, to a trust center, the local state including properties for trust policy assessment;
receive, from the trust center, a token based on an evaluation of the local state by the trust center via the communication interface, the token being signed by trust center; and
establish a communication link with a peer VDI endpoint node, wherein, to establish the communication link, the trust agent is to:
countersign the token to generate a countersigned token, and
transmit, to the peer VDI endpoint node, the countersigned token.

2. The VDI endpoint node of claim 1, wherein the peer VDI endpoint node is a host endpoint node, wherein the processor is to:
receive, from the peer VDI endpoint node, a countersigned peer token; and
validate the countersigned peer token;
wherein establish the communication link with the peer VDI endpoint node includes initiating a remote desktop session with the peer VDI endpoint node in response to validating the countersigned peer token.

3. The VDI endpoint node of claim 2, wherein the token is associated with an expiration event and the countersigned peer token is associated with a peer token expiration event, and wherein the processor is to:
modify the remote desktop session in response to reaching the peer token expiration event before validating a further countersigned peer token from the peer VDI endpoint node.

4. The VDI endpoint node of claim 2, wherein the processor is to:
receive, from the peer VDI endpoint node, a further countersigned peer token;
validate the further countersigned peer token; and
in response to validating the further countersigned peer token, maintain the remote desktop session with the peer VDI endpoint node.

5. The VDI endpoint node of claim 1, wherein the processor is to:
update the local state with modified values for the properties of the local state based on an evaluation of endpoint information using a local policy; and
transmit the updated local state with the modified values, via the communication interface, to the trust center;
receive, from the trust center, a new token based on an evaluation of the updated local state by the trust center, the new token being signed by the trust center;
countersign the new token to generate a new countersigned token; and
transmit, to the peer VDI endpoint node, the new countersigned token.

6. The VDI endpoint node of claim 1, wherein the properties of the local state include at least one selected from a group of:
a connection status indicating whether the VDI endpoint node is online,
a configuration status indicating parameters of a current applied configuration state of the VDI endpoint node,
an applied configuration status indicating whether the current applied configuration state of the VDI endpoint node matches an intended configuration state,
a version status indicating whether a software version of software of the VDI endpoint node is up-to-date,
a peripheral status indicating whether allow-listed or deny-listed peripheral devices are coupled to the VDI endpoint node,
a certificate status indicating whether the VDI endpoint node has an invalid endpoint certificate,
an attestation status indicating whether the VDI endpoint node failed remote attestation,
a location status indicating whether a geographic location of the VDI endpoint node is within a boundary,
an internet protocol (IP) address status indicating whether an IP address of the VDI endpoint node is allow-listed or deny-listed,
an approved node status indicating whether the VDI endpoint is connected to an approved node,
a network connection status indicating whether the VDI endpoint node is connected to a permitted type of network connection,
a time constraint status indicating whether the VDI endpoint node is within permissible time constraints,
a latency status indicating whether the VDI endpoint node is operating within permissible latency constraints,
an alive status indicating whether the VDI endpoint node is responding to keep-alive messages,
a virus status indicating whether an anti-virus or rootkit scanner is reporting no issues, or
a trust failure status indicating whether externally reported trust failures have occurred.

7. The VDI endpoint node of claim 1, wherein the countersigned token is specific to the peer VDI endpoint node, and wherein the processor is to:
countersign the token to generate a second countersigned token specific to a second peer VDI endpoint node;
transmit, to the second peer VDI endpoint node, the second countersigned token;
receive, from the second peer VDI endpoint node, a second countersigned peer token;
validate the second countersigned peer token; and
in response to validating the second countersigned peer token, establish a second communication link with the second peer VDI endpoint node.

8. A method comprising:
transmitting, by a virtual desktop infrastructure (VDI) endpoint node, a local state of the VDI endpoint node to a trust center, the local state including properties for trust policy assessment;
receiving, from the trust center, a token based on an evaluation of the local state by the trust center, the token being signed by the trust center; and
establishing, by the VDI endpoint node, a communication link with a peer VDI endpoint node, wherein establishing the communication link includes:
countersigning the token to generate a countersigned token;
transmitting, to the peer VDI endpoint node, the countersigned token;
receiving, from the peer VDI endpoint node, a countersigned peer token;
validating the countersigned peer token; and
in response to validating the countersigned peer token, establishing the communication link with the peer VDI endpoint node.

9. The method of claim 8, comprising:
modifying the communication link with the peer VDI endpoint node in response to at least one selected from a group of:
reaching a peer token expiration event that is associated with the countersigned peer token before validating a further countersigned peer token from the peer VDI endpoint node,
failing to validate a further peer token received from the peer VDI endpoint node, or
receiving an indication from the trust center that the countersigned peer token has become invalid.

10. The method of claim 8, comprising:
receiving, from the peer VDI endpoint node, a further countersigned peer token, wherein a peer state of the peer VDI endpoint node provided with the countersigned peer token is different than a further peer state of the peer VDI endpoint node provided with the further countersigned peer token;
validating the further countersigned peer token; and
in response to validating the further countersigned peer token, maintaining the communication link.

11. The method of claim 8, wherein validating the countersigned peer token comprises:
determining a permission level for the communication link based on evaluating the countersigned peer token, the token received from the trust center, or both; and
applying, by the endpoint node, the permission level for the communication link, the permission level defining a capability of the endpoint node.

12. The method of claim 11, wherein the permission level defining the capability of the endpoint node includes at least one selected from a group of:
preventing download of certain data from the peer VDI endpoint node,
preventing access to certain applications,
preventing transmission of private data to the peer VDI endpoint node,
preventing access to a specific website, or
preventing access to a peripheral device connected to the peer VDI endpoint node.

13. The method of claim 8, comprising:
countersigning the token to generate a second countersigned token;
transmitting, to a second peer VDI endpoint node, the second countersigned token;
receiving, from the second peer VDI endpoint node, a second countersigned peer token;
validating the second countersigned peer token; and
in response to validating the second countersigned peer token, establishing a second communication link with the second peer VDI endpoint node.

14. The method of claim 13, comprising:
when validating the second countersigned peer token, determining, by the VDI endpoint node, that the second peer VDI endpoint node is less secure than the peer VDI endpoint node; and
applying, by the VDI endpoint node, a more restrictive permission level to the second peer VDI endpoint node than to the peer VDI endpoint node in response to the determining.

15. A nontransitory computer readable medium comprising instructions that, when executed by a processor, cause the processor to:
transmit a local state of a virtual desktop infrastructure (VDI) endpoint node to a trust center;
receive, from the trust center, a token based on an evaluation of the local state by the trust center, the token being signed by trust center; and
establish a communication link with a peer VDI endpoint node, wherein, to establish the communication link, the processor is to:
countersign the token to generate a countersigned token;
transmit, to the peer VDI endpoint node, the countersigned token;
receive, from the peer VDI endpoint node, a countersigned peer token;
validate the countersigned peer token; and
in response to validating the countersigned peer token, establish the communication link.

16. The nontransitory computer readable medium of claim 15,
wherein the token includes the local state, a security policy applied to the local state by the trust center, or both the local state and the security policy, where the security policy is specific to an endpoint type of the VDI endpoint node.

17. The nontransitory computer readable medium of claim 15 wherein, to validate the countersigned peer token, the instructions, when executed, cause the processor to:
decrypt the countersigned peer token to identify content of a peer token generated by the trust center based on a peer local state of the peer VDI endpoint node;
evaluate the content to determine a permission level for the communication link; and
apply, by the VDI endpoint node, the permission level for the communication link.

18. The nontransitory computer readable medium of claim 15, wherein VDI endpoint node is a client endpoint node, the peer VDI endpoint node is a host endpoint node, and wherein establish the communication link with a peer VDI endpoint node comprises initiating a remote desktop session with the peer VDI endpoint node.

19. The nontransitory computer readable medium of claim 18,
wherein the token includes an expiration event including an expiration time that is set by the trust center based on a trust level determined by the trust center for the VDI endpoint node or based on a type of endpoint node.

20. The nontransitory computer readable medium of claim 15, wherein to validate the countersigned peer token, the instructions, when executed, cause the processor to:
evaluate the countersigned peer token to determine a permission level for the communication link; and
apply, by the VDI endpoint node, the permission level for the communication link based on the countersigned peer token, the permission level defining a capability of the VDI endpoint node.
